# EUROPEAN PATENT APPLICATION

(11) **EP 4 492 365 A1**
(43) Date of publication of application: **15.01.2025**
(21) Application number: 23765835.6
(22) Date of filing: 28.02.2023
(51) Int. Cl.: G09F 13/04, G09F 9/33, G09F 9/35, G09F 9/30

(54) **FULL-SCREEN DISPLAY APPARATUS, AND HOUSEHOLD APPLIANCE AND CONTROL METHOD THEREFOR**

(30) Priority: 10.03.2022 CN 202210250400; 10.03.2022 CN 202220554662 U; 10.03.2022 CN 202210240155; 10.03.2022 CN 202220554621 U; 10.03.2022 CN 202220554585 U; 10.03.2022 CN 202220554485 U; 10.03.2022 CN 202220554584 U; 10.03.2022 CN 202220554582 U; 10.03.2022 CN 202220554518 U; 10.03.2022 CN 202220554517 U; 10.03.2022 CN 202210237974
(71) Applicant: Wuhu Midea Kitchen and Bath Appliances Mfg. Co., Ltd., Wuhu, Anhui 241009 (CN)
(72) Inventor: CHEN, Shishi, Wuhu, Anhui 241009 (CN); ZHANG, Jian, Wuhu, Anhui 241009 (CN); GAO, Jianjian, Wuhu, Anhui 241009 (CN); WU, Qijun, Wuhu, Anhui 241009 (CN); ZHANG, Lixiao, Wuhu, Anhui 241009 (CN)
(74) Representative: RGTH
(86) International application number: PCT/CN2023/078747
(87) International publication number: WO 2023/169257

(57) **Abstract**

The present disclosure discloses a full-screen display apparatus, a household appliance, and a method for controlling a household appliance. The full-screen display apparatus includes a light-transmitting substrate, an inkjet printing layer, a light-shielding layer, and a backlight module. The inkjet printing layer is formed at the light-transmitting substrate through inkjet printing and at least includes a background pattern and a touch control pattern. Each of the background pattern and the touch control pattern is light-transmitting. The light-shielding layer is disposed at the inkjet printing layer or the light-transmitting substrate and includes a light-transmitting region corresponding to the background pattern and the touch control pattern. The backlight module is disposed at a light incident side of the light-transmitting substrate. Light emitted by the backlight module is able to transmit through the light-transmitting substrate, the background pattern, the touch control pattern, and the light-transmitting region to illuminate the background pattern and the touch control pattern.

## Description

### CROSS-REFERENCE TO RELATED APPLICATION

This application claims priorities to Chinese Patent Applications No. 2022102504002, filed on March 10, 2022, entitled "FULL-SCREEN DISPLAY APPARATUS AND HOUSEHOLD APPLIANCE", No. 2022205546623, filed on March 10, 2022, entitled "FULL-SCREEN DISPLAY APPARATUS AND HOUSEHOLD APPLIANCE", No. 2022205546214, filed on March 10, 2022, entitled "DISPLAY APPARATUS AND HOUSEHOLD APPLIANCE", No. 2022205545851, filed on March 10, 2022, entitled "DISPLAY APPARATUS AND HOUSEHOLD APPLIANCE", No. 2022205544859, filed on March 10, 2022, entitled "DISPLAY APPARATUS AND HOUSEHOLD APPLIANCE", No. 2022205545847, filed on March 10, 2022, entitled "DISPLAY APPARATUS AND HOUSEHOLD APPLIANCE", No. 2022205545828, filed on March 10, 2022, entitled "DISPLAY APPARATUS AND HOUSEHOLD APPLIANCE", No. 202220554518X, filed on March 10, 2022, entitled "DISPLAY APPARATUS AND HOUSEHOLD APPLIANCE", No. 2022205545175, filed on March 10, 2022, entitled "DISPLAY APPARATUS AND HOUSEHOLD APPLIANCE", No. 2022102401557, filed on March 10, 2022, entitled "DISPLAYING AND CONTROLLING METHOD FOR HOUSEHOLD APPLIANCE, COMPUTER STORAGE MEDIUM, AND HOUSEHOLD APPLIANCE", No. 2022102379746, filed on March 10, 2022, entitled "METHOD FOR CONTROLLING HOUSEHOLD APPLIANCE, COMPUTER STORAGE MEDIUM, AND HOUSEHOLD APPLIANCE", the entire disclosures of which are incorporated herein by reference.

### FIELD

The present disclosure relates to the technical field of household appliances, and in particular, to a full-screen display apparatus, a household appliance, and a method for controlling a household appliance.

### BACKGROUND

With the economic development and improvement of living standards, consumers have higher and higher requirements for household appliances such as water heaters and water purifiers. In order to facilitate a user operation, display apparatuses are generally mounted on the household appliances as operation interfaces.

### SUMMARY

The present disclosure provides a full-screen display apparatus, a household appliance, and a method for controlling a household appliance, to solve the problem of fewer display pictures and a single display on the household appliance in the related art.

In a first aspect, the present disclosure provides a full-screen display apparatus, comprising: a light-transmitting substrate; an inkjet printing layer formed at the light-transmitting substrate through inkjet printing and at least comprising a background pattern and a touch control pattern; a light-shielding layer disposed at the inkjet printing layer or the light-transmitting substrate and comprising a light-transmitting region corresponding to the background pattern and the touch control pattern; and a backlight module disposed at a light incident side of the light-transmitting substrate. Each of the background pattern and the touch control pattern is light-transmissive. Light emitted by the backlight module is capable of transmitting through the light-transmitting substrate, the background pattern, the touch control pattern, and the light-transmitting region to illuminate the background pattern and the touch control pattern.

In a second aspect, the present disclosure also provides a household appliance, comprising a household appliance body and a full-screen display apparatus disposed at the household appliance body. The full-screen display apparatus comprises: a light-transmitting substrate; an inkjet printing layer formed at the light-transmitting substrate through inkjet printing and at least comprising a background pattern and a touch control pattern; a light-shielding layer disposed at the inkjet printing layer or the light-transmitting substrate and comprising a light-transmitting region corresponding to the background pattern and the touch control pattern; and a backlight module disposed at a light incident side of the light-transmitting substrate. Each of the background pattern and the touch control pattern is light-transmissive. Light emitted by the backlight module is capable of transmitting through the light-transmitting substrate, the background pattern, the touch control pattern, and the light-transmitting region to illuminate the background pattern and the touch control pattern.

In a third aspect, the present disclosure also provides a method for controlling a household appliance, applied in the household appliance. The method comprises: obtaining a touch control instruction triggered based on the touch control pattern; and controlling the backlight module to perform backlight on the background pattern and the touch control pattern based on the touch control instruction and outputting a corresponding background sound effect based on the touch control instruction.

In a fourth aspect, the present disclosure also provides a method for controlling a household appliance, applied in the household appliance. The method comprises: obtaining a corresponding target lamp source from a plurality of lamp sources of the backlight module in response to a display instruction being obtained; and controlling the target lamp source based on a predetermined lighting manner, and enabling the target lamp source to dynamically illuminate a target display pattern in a plurality of to-be-displayed patterns corresponding to the target lamp source, the plurality of to-be-displayed patterns comprising the touch control pattern, the background pattern, and a state indication pattern.

Beneficial effects of the present disclosure are as follows: when the full-screen display apparatus operates normally, in addition to displaying the touch control pattern and other monotonous patterns, aesthetic background patterns can also be displayed simultaneously, and a display area of the full-screen display apparatus can be fully utilized, to make pictures displayed by the full-screen display apparatus richer and more colorful. Moreover, when the full-screen display apparatus is applied in the household appliance, a super-realistic large color screen effect in the household appliance can be simulated.

### BRIEF DESCRIPTION OF THE DRAWINGS

In order to clearly explain technical solutions of embodiments of the present disclosure, drawings used in the description of the embodiments are briefly described below. Obviously, the drawings as described below are merely some embodiments of the present disclosure. Based on these drawings, other drawings can be obtained by those skilled in the art without inventive effort.
FIG. 1 is a schematic structural view of a full-screen display apparatus according to an embodiment of the present disclosure.
FIG. 2 is a schematic view of an inkjet printing layer according to an embodiment of the present disclosure.
FIG. 3 is a schematic structural view of a full-screen display apparatus according to an embodiment of the present disclosure.
π 4 is a schematic structural view of a full-screen display apparatus according to an embodiment of the present disclosure.
FIG. 5 is a schematic structural view of a full-screen display apparatus according to an embodiment of the present disclosure.
FIG. 6 is a schematic structural view of a full-screen display apparatus according to an embodiment of the present disclosure.
FIG. 7 is a schematic structural view of a full-screen display apparatus according to an embodiment of the present disclosure.
FIG. 8 is a schematic structural view of a full-screen display apparatus according to an embodiment of the present disclosure.
FIG. 9 is a schematic view of an internal structure of a full-screen display apparatus according to an embodiment of the present disclosure.
FIG. 10 is a schematic view of a three-dimensional structure of a household appliance according to an implementation of the present disclosure.
FIG. 11 is a schematic view of a three-dimensional structure of the display apparatus shown in FIG. 10.
FIG. 12 is a schematic exploded view of the structure of the display apparatus shown in FIG. 11.
FIG. 13 is a schematic cross-sectional structural view of the display apparatus shown in FIG. 11.
FIG. 14 is a schematic cross-sectional structural view of a display apparatus according to another implementation of the present disclosure.
FIG. 15 is a schematic structural view of a backlight module according to an implementation of the present disclosure.
FIG. 16 is a schematic exploded view of a structure of another display apparatus shown in FIG. 11.
FIG. 17 is a schematic structural view of an elastic electric conductor of a display apparatus being respectively connected to a conductive silver paste layer and an electric control board according to an implementation of the present disclosure.
FIG. 18 is a top view of an inkjet printing layer according to an implementation of the present disclosure.
FIG. 19 is a top view of a conductive silver paste layer according to an implementation of the present disclosure.
FIG. 20 is a schematic structural view of an elastic electric conductor of a display apparatus being respectively connected to a conductive silver paste layer and an electric control board according to an implementation of the present disclosure.
FIG. 21 is a top view of a display film according to an implementation of the present disclosure.
FIG. 22 is a top view of a conductive silver paste layer according to an implementation of the present disclosure.
FIG. 23 is a schematic structural view of an elastic electric conductor of a display apparatus being respectively connected to a conductive silver paste layer and an electric control board according to an implementation of the present disclosure.
FIG. 24 is a top view of an inkjet printing layer according to an implementation of the present disclosure.
FIG. 25 is a top view of a conductive silver paste layer according to an implementation of the present disclosure.
FIG. 26 is a schematic structural view of a display apparatus according to an embodiment of the present disclosure.
FIG. 27 is a schematic structural view of a display film according to an embodiment of the present disclosure.
FIG. 28 is a schematic structural view of a display apparatus according to an embodiment of the present disclosure.
FIG. 29 is a schematic structural view of a display apparatus according to an embodiment of the present disclosure.
FIG. 30 is a schematic structural view of a display apparatus when a backlight module is a direct backlight module 20 according to an embodiment of the present disclosure.
FIG. 31 is a schematic structural view of a display apparatus when a backlight module is a direct backlight module 20 according to an embodiment of the present disclosure.
FIG. 32 is a schematic structural view of a display apparatus when a backlight module is an edge backlight module according to an embodiment of the present disclosure.
FIG. 33 is a schematic structural view of a display apparatus according to an embodiment of the present disclosure.
FIG. 34 is a schematic cross-sectional structural view of a display apparatus according to an embodiment of the present disclosure.
FIG. 35 is a schematic structural view of a light guide plate according to an embodiment of the present disclosure.
FIG. 36 is a schematic exploded view of a display apparatus according to an embodiment of the present disclosure.
FIG. 37 is a partially schematic exploded view of a display apparatus according to an embodiment of the present disclosure.
FIG. 38 is a schematic cross-sectional view of a display apparatus according to an embodiment of the present disclosure.
FIG. 39 is a schematic exploded view of a display apparatus according to another embodiment of the present disclosure.
FIG. 40 is a partially schematic exploded view of a display apparatus according to another embodiment of the present disclosure.
FIG. 41 is a schematic cross-sectional view of a display apparatus according to another embodiment of the present disclosure.
FIG. 42 is a schematic cross-sectional view of a display film according to an embodiment of the present disclosure.
FIG. 43 is a schematic cross-sectional view of a display film according to another embodiment of the present disclosure.
FIG. 44 is a schematic cross-sectional view of a display film according to yet another embodiment of the present disclosure.
FIG. 45 is a schematic structural view of a backlight module, a display film, an electric control board, and a conductive member according to an embodiment of the present disclosure.
FIG. 46 is a schematic display view of a display film according to an embodiment of the present disclosure.
FIG. 47 is a schematic view of an exploded structure when a to-be-displayed pattern of a display film layer is not illuminated by a backlight module according to an embodiment of the present disclosure.
FIG. 48 is a schematic view of an exploded structure when a to-be-displayed pattern of a display film layer is illuminated by a backlight module according to an embodiment of the present disclosure.

### DETAILED DESCRIPTION

In order to make the objects, technical solutions, and advantages of the present disclosure clear, the present disclosure will be described in detail with reference to the accompanying drawings and embodiments. It should be understood that the embodiments described here are only used to explain, rather than limiting, the present disclosure.

With the economic development and improvement of living standards, consumers have higher and higher requirements for household appliances such as water heaters and water purifiers. In order to facilitate a user operation, display apparatuses are generally mounted on the household appliances as operation interfaces. However, in the related art, few display pictures are shown on the household appliances, with a single display.

The present disclosure provides a full-screen display apparatus, a household appliance, and a method for controlling a household appliance, to solve the problem that, in the related art, few display pictures are shown on the household appliance, with a single display.

### First embodiment

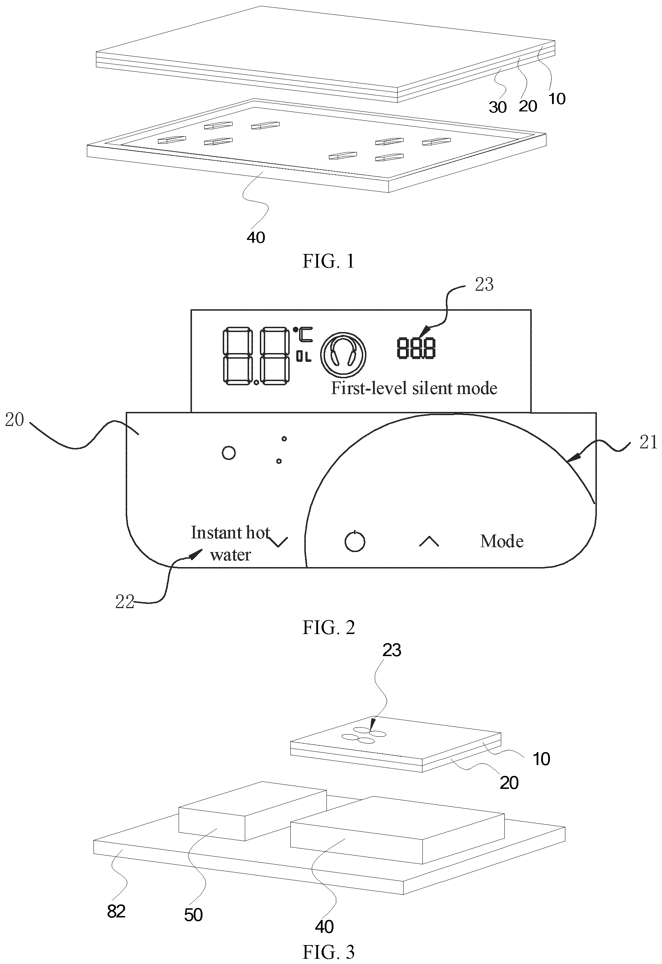

In a first aspect, the present disclosure provides a full-screen display apparatus. As shown in FIG. 1 and FIG. 2, the full-screen display apparatus comprises a light-transmitting substrate 10, an inkjet printing layer 20, a light-shielding layer 30, and a backlight module 40.

The light-transmitting substrate 10 is used to provide protection for the inkjet printing layer 20, the light-shielding layer 30, the backlight module 40, and the like, and may be a light-transmitting glass plate, a light-transmitting plastic plate, or the like.

The inkjet printing layer 20 is formed at the light-transmitting substrate 10 through inkjet printing, and at least comprises a background pattern 21 and a touch control pattern 22. Each of the background pattern 21 and the touch control pattern 22 is light-transmissive. It can be understood that the inkjet printing layer 20 may be formed at a light incident side or a light-emitting side of the light-transmitting substrate 10, and light emitted by the backlight module 40 is capable of transmitting through the background pattern 21 and the touch control pattern 22 at the inkjet printing layer 20 to illuminate the background pattern 21 and the touch control pattern 22. In this way, a user may clearly view the background pattern 21 and the touch control pattern 22, and the pattern formed through inkjet printing has advantages of vivid colors and high saturation, which is helpful to clear displays of the background pattern 21 and the touch control pattern 22. The light emitted by the backlight module 40 is emitted into the light-transmitting substrate 10 from the light incident side of the light-transmitting substrate 10. The background pattern 21 may be at least one of an earth pattern, a moon pattern, a lake surface pattern, or other patterns, which can improve a picture richness degree during a display of the display apparatus. The touch control pattern 22 may be at least one of an opening/closing control pattern, a temperature control pattern, a time control pattern, or a mode control pattern. The touch control pattern 22 may be used to instruct the user to tap at a corresponding position of the full-screen display apparatus for performing adjustment of opening/closing control, temperature control, time control, and mode control, to facilitate user's precise adjustment. For example, the user may realize opening/closing of the full-screen display apparatus by tapping in a region where the touch control pattern 22 is located on the full-screen display apparatus.

The light-shielding layer 30 is disposed at the inkjet printing layer 20 or the light-transmitting substrate 10, and comprises a light-transmitting region corresponding to the background pattern 21 and the touch control pattern 22. It can be understood that the light-shielding layer 30 may be disposed at a side of the light-transmitting substrate 10 away from the inkjet printing layer 20, or may also be disposed at a side of the inkjet printing layer 20 away from the light-transmitting substrate 10. The light-shielding layer 30 is configured to shield a region of the inkjet printing layer 20 that is without the need for being light-transmissive (such as an outer peripheral edge region of each of the background pattern 21 and the touch control pattern 22), and the light-transmitting region may be light-transmissive, to enable the background pattern 21 and the touch control pattern 22 to be normally displayed under illumination of light. By taking the background pattern 21 as an example, when the background pattern 21 is normally illuminated, light at the outer peripheral edge region of the background pattern 21 is shielded by the light-shielding layer 30, causing a region where the background pattern 21 is located to form a sharp contrast of light and dark with the outer peripheral edge region of the background pattern 21. In this way, a display of the background pattern 21 is made clearer. A preparation material of the light-shielding layer 30 may be black ink, black resin, light-shielding tape, or the like. The light-shielding layer 30 may be formed at the inkjet printing layer 20 or the light-transmitting substrate 10 through a process such as silk screen printing, inkjet printing, or pasting.

The backlight module 40 is disposed at the light incident side of the light-transmitting substrate 10, and the light emitted by the backlight module 40 is capable of transmitting through the light-transmitting substrate 10, the background pattern 21, the touch control pattern 22, and the light-transmitting region to illuminate the background pattern 21 and the touch control pattern 22. The backlight module 40 may provide the light for the background pattern 21 and the touch control pattern 22 to illuminate the background pattern 21 and the touch control pattern 22.

It can be understood that in the present disclosure, when the full-screen display apparatus operates normally, in addition to displaying the touch control pattern 22 and other monotonous patterns, aesthetic background patterns 21 may also be displayed simultaneously, and a display area of the full-screen display apparatus may be fully utilized, to make pictures displayed by the full-screen display apparatus richer and more colorful. Moreover, when the full-screen display apparatus is applied in the household appliance, a super-realistic large color screen effect in the household appliance can be simulated.

In an embodiment of the present disclosure, continuing to refer to FIG. 2, the inkjet printing layer 20 may further comprise a light-transmitting state indication pattern 23. The state indication pattern 23 may be used to indicate an operation state of the household appliance. For example, the state indication pattern 23 may be at least one of a temperature indication pattern, a humidity indication pattern, a time indication pattern, or a mode control pattern. In an exemplary embodiment of the present disclosure, for example, the state indication pattern 23 may indicate that a water temperature is 88 degrees. The state indication pattern 23 may be displayed simultaneously with the touch control pattern 22 and the background pattern 21 to make the picture displayed by the full-screen display apparatus richer.

The state indication pattern 23, the background pattern 21, and the touch control pattern 22 may share the backlight module 40, i.e., light illuminating the state indication pattern 23, the background pattern 21, and the touch control pattern 22 may each be provided by the backlight module 40, eliminating the need to provide an additional illumination apparatus separately for illuminating the state indication pattern 23, the background pattern 21, and the touch control pattern 22, which lowers assembly difficulty and production costs of the full-screen display apparatus.

In an embodiment of the present disclosure, the touch control pattern 22 may comprise the opening/closing control pattern. The backlight module 40 comprises a first light source corresponding to the opening/closing control pattern. The first light source consists of one or more of a plurality of lamp sources 43, and light emitted from the first light source may illuminate the opening/closing control pattern.

After the full-screen display apparatus is connected to the power, the first light source is in a constant on state, causing the opening/closing control pattern to be in the constant on state.

It should be noted that a touch control element, which is disposed in a region where the opening/closing control pattern is located, in the full-screen display apparatus may control on/off of the full-screen display apparatus. The full-screen display apparatus is connected to the power, it means that the full-screen display apparatus is connected to a power supply. At this time, the first light source is in the on state, causing the opening/closing control pattern to be in the constant on state. In this way, even if the full-screen display apparatus is in an off state, the user can still clearly view the opening/closing control pattern, to facilitate a user's power-on operation on the full-screen display apparatus when the full-screen display apparatus is in the off state.

In an embodiment of the present disclosure, when the full-screen display apparatus is powered on, the background pattern 21 and the state indication pattern 23 are illuminated in sequence, or the state indication pattern 23 and the background pattern 21 are illuminated in sequence; and when the full-screen display apparatus is powered off, the background pattern 21 and the state indication pattern 23 are extinguished in sequence, or the state indication pattern 23 and the background pattern 21 are extinguished in sequence.

It can be understood that the full-screen display apparatus is in the off state, and the opening/closing control pattern is tapped, such that when the full-screen display apparatus is powered on, the background pattern 21 and the state indication pattern 23 are sequentially illuminated, to simulate a super-realistic dynamic power-on picture. The full-screen display apparatus is in the on state, and the opening/closing control pattern is tapped, such that when the full-screen display apparatus is powered off, the background pattern 21 and the state indication pattern 23 are extinguished in sequence, to simulate a super-realistic dynamic power-off picture.

In an embodiment of the present disclosure, as shown in FIG. 2 and FIG. 3, the full-screen display apparatus may further comprise a nixie tube 50. The nixie tube 50 is corresponding to the state indication pattern 23 and configured to illuminate at least part of a region of the state indication pattern 23. The nixie tube 50 may be located at the light incident side of the light-transmitting substrate 10 to be protected by the light-transmitting substrate 10.

It can be understood that the nixie tube 50 is an electronic device that is capable of displaying numbers and other information. The nixie tube 50 may provide light for the state indication pattern 23 and make the state indication pattern 23 realize a dynamic change display, to dynamically display different patterns, such as displaying different temperature values. A specific operation principle of the nixie tube 50 has been publicly announced in the related art, and details are omitted in the present disclosure.

In an embodiment of the present disclosure, the background pattern 21 may comprise a grating three-dimensional pattern, enabling the full-screen display apparatus to display a clear pattern with a strong three-dimensional effect, which increases attractiveness of the household appliance. The grating three-dimensional pattern is a pattern with a three-dimensional effect displayed on a plane using a grating material.

The grating three-dimensional pattern is capable of displaying a pattern comprising at least one of a skeuomorphism pattern, a text pattern, or a number pattern. The skeuomorphism pattern may be a water cup pattern, a sun pattern, a moon pattern, a lake surface pattern, a network icon pattern, a communication icon pattern, an earphone pattern, and other patterns. The text pattern may be a pattern such as a Kai Ti text pattern and a wordart text pattern. The number pattern may be a pattern of any numerical value, like 1, 2, and 3.

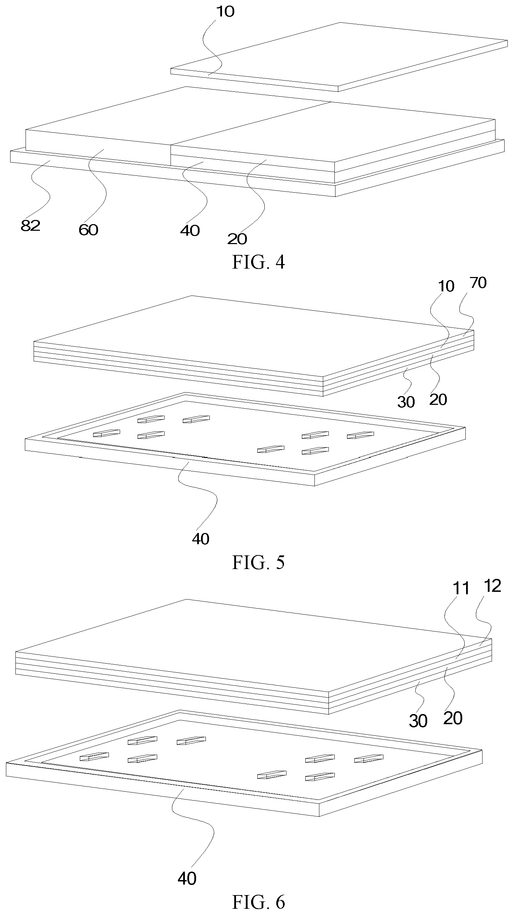

In an embodiment of the present disclosure, as shown in FIG. 4, the full-screen display apparatus further comprises a display screen 60. The display screen 60 and the backlight module 40 are arranged side by side. A light-emitting side of the display screen 60 and a light-emitting side of the backlight module 40 face towards a same side.

The display screen 60 comprises a liquid crystal display screen and/or an organic light-emitting diode (OLED) display screen.

When the full-screen display apparatus comprises the liquid crystal display screen, a light-emitting side of the liquid crystal display screen and the light-emitting side of the backlight module 40 face towards a same side, and the liquid crystal display screen may be arranged side by side with the backlight module 40 to be spliced at a side of the backlight module 40. When the full-screen display apparatus comprises an OLED display screen, a light-emitting side of the OLED display screen and the light-emitting side of the backlight module 40 face towards a same side, and the OLED display screen may be arranged side by side with the backlight module 40 to be spliced at the side of the backlight module 40.

It can be understood that besides the background pattern 21 and the touch control pattern 22 at the inkjet printing layer 20, the liquid crystal display screen and/or the OLED display screen may display more images, and may display images with dynamic changes, which can make the picture displayed by the full-screen display apparatus richer and more colorful.

In an embodiment of the present disclosure, as shown in FIG. 5, the light-transmitting substrate has a light transmittance greater than or equal to 40%, and smaller than or equal to 60%. The light transmittance of the light-transmitting substrate 10 may be 40%, 45%, 50%, 60%, or the like. The light-transmitting substrate 10 may be semi-black glass. In this way, when the backlight module 40 doesn't illuminate, and when the inkjet printing layer 20 is viewed through the light-transmitting substrate 10, a pattern of the inkjet printing layer 20 shows black.

In some embodiments of the present disclosure, the light-transmitting substrate 10 may comprise a glass substrate 11. The inkjet printing layer 20 is formed at a back surface of the glass substrate 11 through inkjet printing, and the light-shielding layer 30 is disposed at a front surface or the back surface of the glass substrate 11. The glass substrate 11 has a good light transmittance. In this way, a power of the backlight module 40 at an inner side may be set lower, which can prolong a service life of the backlight module 40, and is helpful to a reduction in a power of the entire full-screen display apparatus.

In other embodiments of the present disclosure, as shown in FIG. 6, the light-transmitting substrate 10 may comprise a glass substrate 11 and a transparent substrate layer 12 attached to a back surface of the glass substrate 11. The inkjet printing layer 20 is disposed at the back surface of the transparent substrate layer 12, and the light-shielding layer 30 is disposed at a front surface or the back surface of the transparent substrate layer 12. The transparent substrate layer 12 may be a polyester resin (PET) layer. The transparent substrate layer 12 may be used as a carrier for the inkjet printing layer 20 to facilitate the inkjet printing of the inkjet printing layer 20. The light-shielding layer 30 may be transferred to the transparent substrate layer 12 through a composite and transfer printing process.

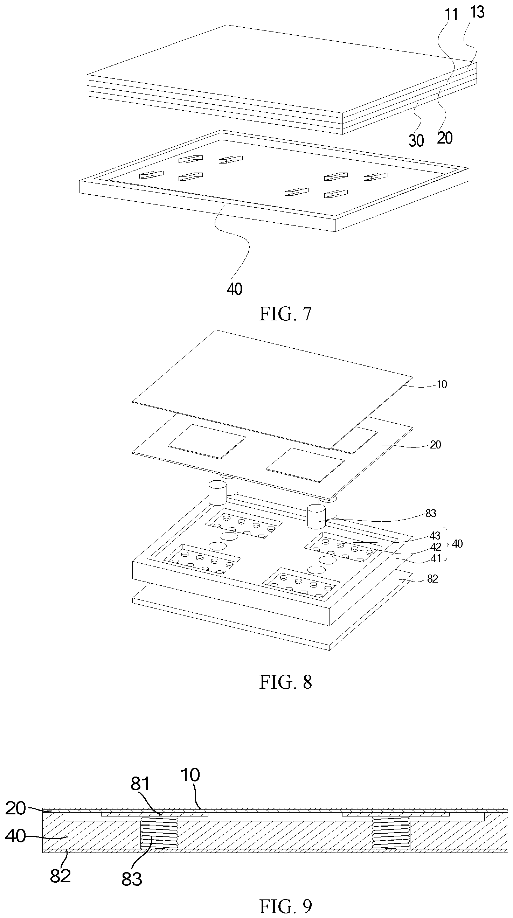

In other embodiments of the present disclosure, as shown in FIG. 7, the light-transmitting substrate 10 may comprise a plastic substrate 13 and a transparent substrate layer 12 attached to a front surface of the plastic substrate 13. The plastic substrate 13 is light-transmissive. The inkjet printing layer 20 is disposed at the back surface of the transparent substrate layer 12, and the light-shielding layer 30 is disposed at the front surface or the back surface of the transparent substrate layer 12.

It should be noted that the back surface of the glass substrate 11 refers to a side surface of the glass substrate 11 close to the backlight module 40, and the front surface of the glass substrate 11 is a side surface of the glass substrate 11 away from the backlight module 40. Similarly, the back surface of the plastic substrate 13 refers to a side surface of the plastic substrate 13 close to the backlight module 40, and the front surface of the plastic substrate 13 is a side surface of the plastic substrate 13 away from the backlight module 40.

In some embodiments of the present disclosure, as shown in FIG. 8 and FIG. 9, the full-screen display apparatus further comprises a light-transmitting conductive member 81, an electric control board 82, and an elastic electric conductor 83.

The light-transmitting conductive member 81 is disposed at a side of the light-transmitting substrate 10 facing towards the backlight module 40. A projection of the light-transmitting conductive member 81 on the light-transmitting substrate 10 covers the touch control pattern 22. The electric control board 82 is connected to the backlight module 40. The elastic electric conductor 83 has two ends respectively abutting against the electric control board 82 and the light-transmitting conductive member 81, to be electrically connected to the electric control board 82 and the light-transmitting conductive member 81.

It can be understood that, compared with a conventional solution of electrically connecting the light-transmitting conductive member 81 to a main control board through wires, the elastic electric conductor 83 may ensure that an electrical connection relationship between the light-transmitting conductive member 81 and the main control board (i.e., electric control boards 82 in FIG. 8 and FIG. 9) is stable, and to ensure a normal operation of the full-screen display apparatus for a long period of time, which can prevent a circuit of the full-screen display apparatus from aging or having poor contact after long-term use.

When the full-screen display apparatus comprises a nixie tube 50, the nixie tube 50 may also be electrically connected to the electric control board 82, and the electric control board 82 may supply power to the nixie tube 50 and control a light-emitting state of the nixie tube 50.

In an embodiment of the present disclosure, the elastic electric conductor 83 comprises at least one of a spring, a metal elastic sheet, conductive rubber, or conductive foam. When the elastic electric conductor 83 comprises the conductive rubber, the conductive rubber and the lamp panel support 41 are integrally formed through injection-molding, to enhance a strength of a connection between the conductive rubber and the lamp panel support 41. Meanwhile, an assembly process for the conductive rubber and the lamp panel support 41 is eliminated.

In an embodiment of the present disclosure, a light-transmitting conductive member 81 comprises at least one of a conductive silver paste layer, an indium tin oxide layer, or a conductive resin layer, making the light-transmitting conductive member 81 have a high light transmittance. In this way, the light emitted from the backlight module 40 can transmit through the light-transmitting conductive member 81 and be irradiated at the inkjet printing layer 20, making the pattern at the inkjet printing layer 20 become brighter and more obvious, to facilitate user's identification of the pattern at the inkjet printing layer 20.

Continuing to refer to FIG. 8 and FIG. 9, in an embodiment of the present disclosure, the backlight module 40 may comprise a lamp panel support 41, a lamp panel 42, and a plurality of lamp sources 43.

The lamp panel support 41 is disposed between the electric control board 82 and the light-transmitting substrate 10. The lamp panel 42 is disposed between the lamp panel support 41 and the light-transmitting substrate 10 and electrically connected to the electric control board 82. The plurality of lamp sources 43 are disposed at the lamp panel 42 and electrically connected to the lamp panel 42. The lamp sources 43 are disposed facing towards the light-transmitting substrate 10 and spaced apart from the light-transmitting substrate 10. The elastic electric conductor 83 penetrates the lamp panel support 41.

The lamp panel support 41 mainly plays a supporting role, and the elastic electric conductor 83 passes through a through hole at the lamp panel support 41 and is electrically connected to the main control board, which can avoid occurrence of an unstable electrical connection between the elastic electric conductor 83 and the main control board and the light-transmitting conductive member 81 due to a position deviation of the elastic electric conductor 83. The lamp sources 43 are placed at the lamp panel 42, and light emitted from the lamp sources 43 transmits through the light-transmitting conductive member 81 and is irradiated on the pattern at the inkjet printing layer 20.

In an embodiment of the present disclosure, a surface of the lamp panel 42 facing towards the light-transmitting substrate 10 is provided with a white coating, for example, an aluminum coating or silver coating. By adding the white coating to the lamp panel 42, the white coating may reflect the light emitted from the lamp source 43. In this way, most of the light emitted from the lamp source 43 is emitted to the light-transmitting substrate 10, to improve a utilization rate of the light.

The white coating may be a reflective lacquer coating, and a reflective principle of the reflective lacquer coating is that reflective lacquer contains a large number of light reflection microbeads, which may reflect the incident light through the light reflection microbeads back, to form a good light reflection effect.

### Second embodiment

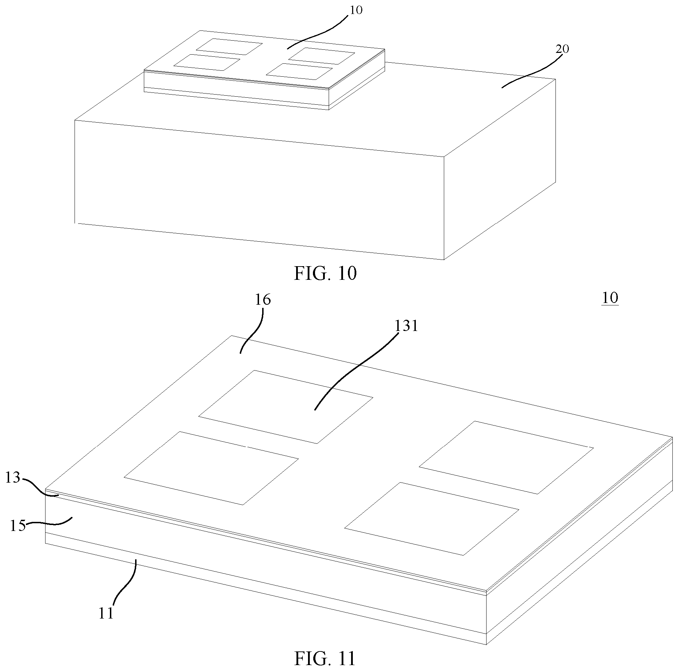

Referring to FIG. 10 to FIG. 13, in some embodiments of the present disclosure, a display apparatus 10 is provided. The display apparatus 10 comprises a main control board 11, an elastic electric conductor 12, a display film 13, and a light-transmitting inductor 14. It should be noted that the display apparatus 10 is a full-screen display apparatus in First embodiment. The main control board 11 is an electric control board 82 in First embodiment. The display film 13 comprises the inkjet printing layer 20 and the light-shielding layer 13 in First embodiment. The light-transmitting inductor 14 is the light-transmitting conductive member 81 in First embodiment.

In an exemplary embodiment of the present disclosure, the main control board 11 is an electronic component in the display apparatus 10 for controlling other electronic devices, has a functional circuit to realize different control functions, and may be electrically connected to a household appliance body 20 (with reference to FIG. 10) to realize communication with the household appliance body 20. For example, the main control board 11 is configured to receive a power-on signal transmitted by the light-transmitting inductor 14 and control power-on of the household appliance body 20 based on the power-on signal; or the household appliance body 20 comprises a control circuit, the main control board 11 is configured to transmit the power-on signal to the control circuit, and the control circuit is configured to control the power-on of the household appliance body 20.

The elastic electric conductor 12 (equivalent to the elastic electric conductor 83 in First embodiment) abuts against the main control board 11 to realize an electrical connection with the main control board 11. By abutting the elastic electric conductor 12 against the main control board 11, stability of an electrical connection relationship between the elastic electric conductor 12 and the main control board 11 can be improved to ensure that the display apparatus 10 operates normally for a long time. Compared with a solution in the related art where wires are connected to the main control board 11 through welding and electrical signal transmission is performed through the wires, the elastic electric conductor 12 may avoid aging or poor contact of the circuit caused by long-term use of the display apparatus 10.

The display film 13 is disposed at a side of the elastic electric conductor 12 facing away from the main control board 11, and has a light-transmitting touch control pattern 131 (equivalent to the touch control pattern 22 in First embodiment). The touch control pattern 131 on the display film 13 is used to characterize a specific function of the household appliance body 20. When the user touches a position corresponding to the touch control pattern 131 on the display film 13, a corresponding instruction may be triggered to control the household appliance body 20 to execute a corresponding command to realize a corresponding function. It can be understood that a plurality of touch control patterns 131 on the display film 13 may be provided, and the shapes of the corresponding touch control patterns 131 are different according to the different functions of the household appliance body 20. When the user needs the household appliance body 20 to perform a specific function, the user may touch the corresponding touch control pattern 131 on the display film 13 to cause the household appliance body 20 to perform the function.

In addition, the display film 13 may be set with black color for all other regions except for the touch control pattern 131. For example, the display film 13 comprises a substrate. The touch control pattern 131 is formed on the substrate through an inkjet printing process. The light-shielding layer (equivalent to the light-shielding layer 30 in First embodiment) is disposed at the substrate through a silk-screen printing technology. A light-transmitting region (equivalent to the light-transmitting region corresponding to the touch control pattern 22 in First embodiment) is formed at a position of the light-shielding layer corresponding to the touch control pattern 131. The light-shielding layer may be a black ink layer. When light within the display apparatus 10 (corresponding to the light emitted from the backlight module 40 in First embodiment) is irradiated on the display film 13, the touch control pattern 131 is illuminated, while other regions of the display film 13 remain in a dark state, which provides the user with a more intuitive visual experience to facilitate the user's identification of the touch control pattern 131 on the display film 13, i.e., to improve an identification degree of the touch control pattern 131. It can be understood that other regions on the display film 13 other than the touch control pattern 131 may be set with other darker colors, which allows for a sufficient brightness difference between these regions and the touch control pattern 131 and facilitates the user's identification.

The light-transmitting inductor 14 is disposed at a side of the display film 13 facing towards the elastic electric conductor 12. A projection of the light-transmitting inductor 14 on the display film 13 covers the touch control pattern 131, and the light-transmitting inductor 14 abuts against and is electrically connected to the elastic electric conductor 12. The light-transmitting inductor 14 is configured to be electrically connected to the elastic electric conductor 12. In this way, when the user touches the touch control pattern 131 on the display film 13, the light-transmitting inductor 14 can sense a touch operation of the user and generate a corresponding touch control signal, and the touch control signal is transmitted to the main control board 11 through the elastic electric conductor 12, to control the household appliance body 20 to perform a function corresponding to the touch control pattern 131. Moreover, the light-transmitting inductor 14 has a light-transmitting function, which allows the light generated within the display apparatus 10 to transmit through and be irradiated on the touch control pattern 131 of the display film 13, to make the touch control pattern 131 bright and easy to be identified by the user.

A specific operation process of the display apparatus 10 is as follows. When the household appliance body 20 is needed to realize a specific function, the user may touch the corresponding position of the touch control pattern 131 of the display film 13. The light-transmitting inductor 14 covering the touch control pattern 131 may sense the touch operation of the user and generate the corresponding touch control signal. The touch control signal is transmitted through the elastic electric conductor 12 to the main control board 11. The main control board 11 controls the household appliance body 20 to perform the function.

In summary, the display apparatus 10 according to the embodiments of the present disclosure can improve the stability of the electrical connection relationship between the elastic electric conductor 12 and the main control board 11, and the stability of the electrical connection relationship between the elastic electric conductor 12 and the light-transmitting inductor 14. In this way, the display apparatus 10 can maintain a normal operation state for a long period of time, which saves time and an overhaul cost spent on a frequent overhaul of the display apparatus 10 for the user. The light-transmitting inductor 14 within the display apparatus 10 may cause the light generated within the display apparatus 10 to transmit through and to be irradiated on the touch control pattern 131 of the display film 13, making the touch control pattern 131 become obvious, to facilitate the user's identification of the touch control pattern 131. Moreover, during assembly of the display apparatus 10, it can complete an electrical connection between the display film 13, the elastic electric conductor 12, and the main control board 11 only by pressing the display film 13 directly onto the elastic electric conductor 12 and the elastic electric conductor 12 directly onto the bonding pad of the main control board 11. Compared with the solution in the art where the wire is welded to various components, an assembly manner in the present disclosure simplifies assembly steps of the display apparatus 10, saves an assembly time of the display apparatus 10, and further lowers a manufacturing cost of the display apparatus 10.

In some embodiments, the elastic electric conductor 12 is in an interference fit with the main control board 11 and the light-transmitting inductor 14, to make the electrical connection between the elastic electric conductor 12 and the main control board 11 and the electrical connection between the elastic electric conductor 12 and the light-transmitting inductor 14 more stable. During the long-term use of the display apparatus 10, the elastic electric conductor 12 may maintain a stable electrical connection with the main control board 11 and the light-transmitting inductor 14, to improve stability of a circuit between the main control board 11, the elastic electric conductor 12, and the light-transmitting inductor 14, and to increase sensitivity of the display apparatus 10 for sensing the touch operation of the user. Moreover, a case where the elastic electric conductor 12 falls off or is loose may not occur, which can save the time and overhaul cost spent on the frequent overhaul of the display apparatus 10 for the user.

In some embodiments, the light-transmitting inductor 14 comprises at least one of the conductive silver paste layer, the indium tin oxide layer, or the conductive resin layer, which makes the light-transmitting inductor 14 have a high light transmittance. In this way, the light generated in the display apparatus 10 is capable of transmitting through the light-transmitting inductor 14 and be irradiated on the display film 13, and the touch control pattern 131 on the display film 13 can become brighter and more obvious. Therefore, the user's identification of the touch control pattern 131 on the display film 13 is facilitated. It is convenient for the user to touch the desired touch control pattern 131. In an exemplary embodiment of the present disclosure, when the conductive silver paste layer is adopted as the light-transmitting inductor 14, compared with the indium tin oxide layer, conductive silver paste has good commercial value due to its lower cost, which can reduce the manufacturing cost. In addition, the conductive silver paste layer has better conductive performance and adhesion properties, which can improve a sensing ability and a conductive ability of the light-transmitting inductor 14 and the stability of the electrical connection of the light-transmitting inductor 14 with the elastic electric conductor 12, and further improve touch control sensitivity of the display apparatus 10.

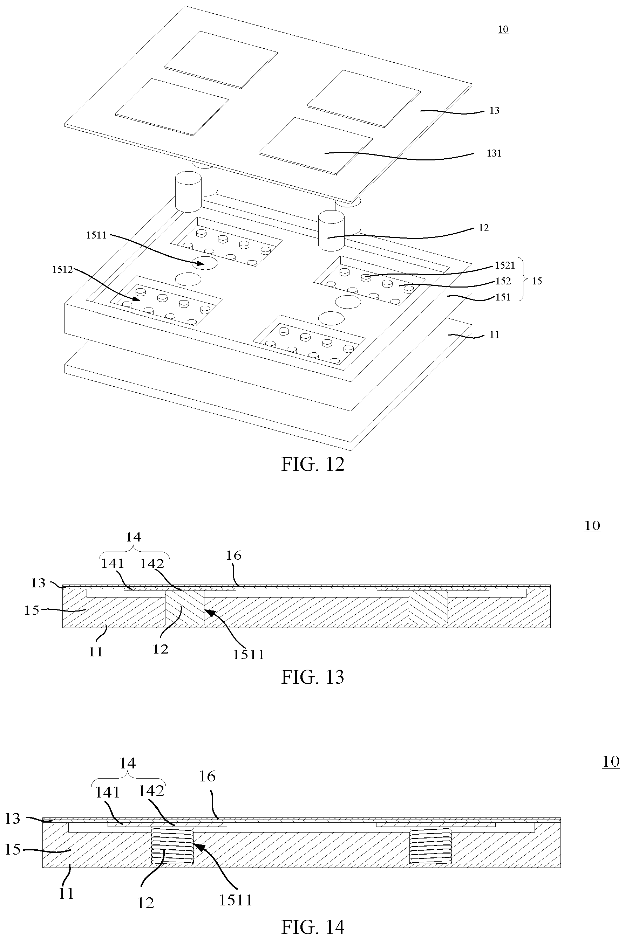

Referring to FIG. 13, the light-transmitting inductor 14 further comprises a light-transmitting portion 141 and a power connection portion 142. A projection of the light-transmitting portion 141 on the display film 13 covers the touch control pattern 131. In this way, the light within the display apparatus 10 can cover the entirety of the touch control pattern 131 when transmitting through the light-transmitting portion 141, to make the touch control pattern 131 more luminous, which further enhances the identification degree. It can be understood that the conductive silver paste layer described above may be formed at the light-transmitting portion 141, to allow the light-transmitting portion 141 to have higher light transmittance. The power connection portion 142 abuts against and is electrically connected to the elastic electric conductor 12, and is mainly used for transmitting electrical signals. When the user touches the touch control pattern 131 on the display apparatus 10, the light-transmitting portion 141 may sense the user's touch operation and generate a corresponding touch signal. The touch signal is transmitted to the main control board 11 through the power connection portion 142 and the elastic electric conductor 12, to cause the main control board 11 to control the household appliance body 20 to perform the corresponding function.

In some embodiments, the elastic electric conductor 12 may comprise at least one of a conductive spring, a metal elastic sheet, conductive rubber, or conductive foam. In an exemplary embodiment of the present disclosure, referring to FIG. 14, when the elastic electric conductor 12 is the conductive spring, the conductive spring is electrically connected to the main control board 11, and abuts against the bonding pad of the main control board 11. Further, the conductive spring may be welded to the bonding pad of the main control board 11, to make the electrical connection between the elastic electric conductor 12 and the main control board 11 more stable. It can be understood that when the elastic electric conductor 12 has a contact part, which is the metal elatic sheet, with the main control board 11, the metal elastic sheet may be welded to the main control board 11, to improve the stability of the electrical connection between the elastic electric conductor 12 and the main control board 11. When the elastic electric conductor 12 has a contact part, which is the conductive rubber or conductive foam, with the main control board 11, the conductive rubber or the conductive foam may be in an interference fit with the bonding pad of the main control board 11 to improve the stability of the electrical connection.

Referring again to FIG. 12, the display apparatus 10 further comprises a backlight module 15 (equivalent to the backlight module 40 in First embodiment), and the backlight module 15 is disposed between the display film 13 and the main control board 11 and electrically connected to the main control board 11. The light emitted by the backlight module 15 may transmit through the light-transmitting inductor 14 and be irradiated on the touch control pattern 131 on the display film 13, enabling the touch control pattern 131 to be well illuminated for the user's identification. In an exemplary embodiment of the present disclosure, the light emitted from the backlight module 15 is to illuminate the touch control pattern 131 after transmitting through the light-transmitting portion 141.

In some embodiments, the backlight module 15 is an edge backlight module, and the edge backlight module may use fewer light sources to emit light, to reduce a production cost of the backlight module 15 and power consumption. Moreover, the edge backlight module may reduce an overall thickness of the display apparatus 10.

In other embodiments, the backlight module 15 is a direct backlight module, and the direct backlight module has a stronger illumination capability than the edge backlight module, which can make the touch control pattern 131 on the display film 13 brighter, and thus can improve the identification degree of the touch control pattern 131.

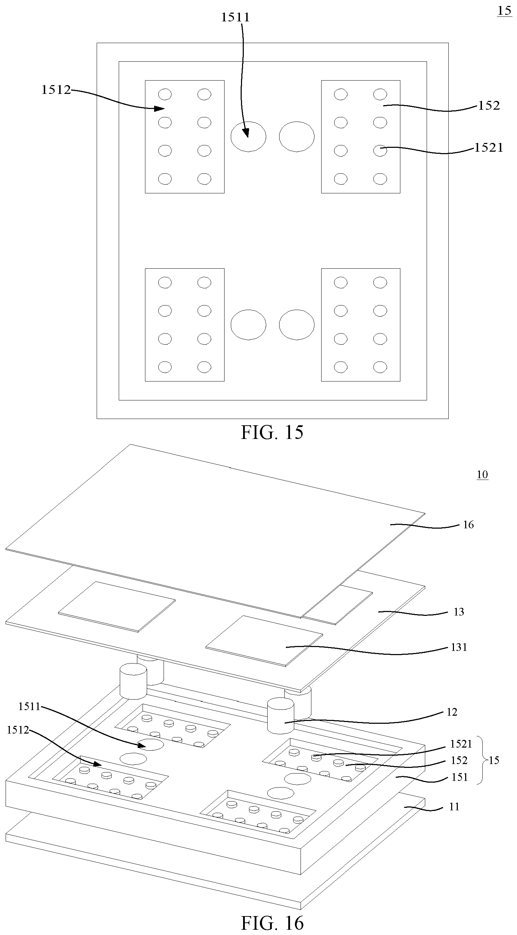

Referring to FIG. 15 and FIG. 16, when the backlight module 15 is the direct backlight module, the backlight module 15 comprises a support 151 (equivalent to the lamp panel support 41 in First embodiment) and a lamp panel 152 (equivalent to the lamp panel 42 in First embodiment). The support 151 is disposed between the display film 13 and the main control board 11, and may be connected to each of the main control board 11 and the display film 13. Moreover, the support 151 has a through hole 1511 for the elastic electric conductor 12 to pass through. The support 151 plays a supporting role, and the elastic electric conductor 12 passes through the through hole 1511 on the support 151 and is electrically connected to the main control board 11. The position of the elastic electric conductor 12 may be kept relatively fixed by constraints of the through hole 1511, improving the stability of the electrical connection between the elastic electric conductor 12 and the main control board 11 and the stability of the electrical connection between the elastic electric conductor 12 and the light-transmitting inductor 14.

The lamp panel 152 is disposed at the support 151 and electrically connected to the main control board 11. The lamp panel 152 has a plurality of lamp sources 1521 (equivalent to the lamp source 43 in First embodiment) provided thereon. The lamp source 1521 is disposed at the lamp panel 152 and electrically connected to the lamp panel 152. In this way, the lamp source 1521 can emit light under the control of the main control board 11, and the emitted light transmits through the light-transmitting portion 141 and is irradiated on the touch control pattern 131 on the display film 13.

Referring to FIG. 12 and FIG. 16, in some embodiments, the support 151 has a plurality of placement grooves 1512 formed thereon. The plurality of placement grooves 1512 are used for accommodating the lamp panels 152. The placement groove 1512 is corresponding to the touch control pattern 131 on the display film 13. The plurality of lamp sources 1521 may be disposed at the lamp panel 152 in one placement groove 1512. Light emitted from the plurality of lamp sources 1521 may be prevented from being largely dispersed because the light is constrained by the placement groove 1512, and may be mainly irradiated on the corresponding touch control pattern 131 intensively, improving a display brightness of the corresponding touch control pattern 131. In this way, the user can better identify the touch control pattern 131 on the display film 13.

In some embodiments, referring to FIG. 16 again, the display apparatus 10 further comprises a light-transmitting panel 16. The light-transmitting panel 16 is located at a side of the display film 13 facing away from the light-transmitting inductor 14 and is attached and connected to the display film 13 to provide a protection for the display film 13. The light-transmitting panel 16 is equivalent to the light-transmitting substrate 10 in First embodiment. During use of the display apparatus 10, the user may directly touch the position on the light-transmitting panel 16 corresponding to the touch control pattern 131, to cause the light-transmitting inductor 14 to sense the user's touch operation and generate the touch signal. The light-transmitting panel 16 may reduce dust, particles, and other substances in the air that come into contact with the display film 13 and contaminate the display film 13, avoiding frequent cleaning of the display film 13 by the user. Moreover, the light-transmitting panel 16 is light-transmissive. In this way, the touch control pattern 131 on the display film 13 can be presented intuitively to the user through the light-transmitting panel 16. The light-transmitting panel 16 may also avoid damage to the touch control pattern 131 caused by direct tapping of a user's finger on the touch control pattern 131. In addition, the light-transmitting panel 16 may be semi-light-transmissive. In this way, when the display apparatus 10 is powered off, the backlight module 15 is also powered off. At this time, the semi-light-transmitting 16 may shield and absorb part of the light reflected by the touch control pattern 131, and the touch control pattern 131 is not obvious, making the entire display apparatus 10, viewed from the user, be a black screen, which can improve display consistency of the display apparatus 10 in a black screen state. It can be understood that the light-transmitting panel 16 may be made of a transparent plastic such as an acrylic plate, transparent glass, or other materials, and the present disclosure does not specifically limit the manufacturing material of the light-transmitting panel 16 on to these examples.

### Third embodiment

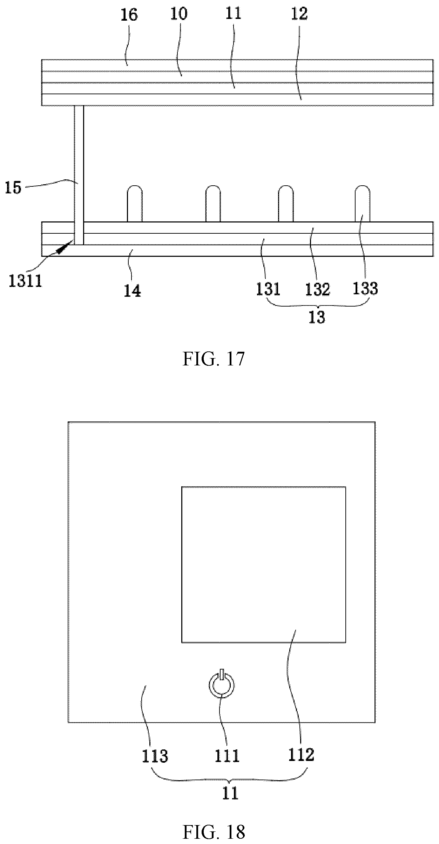

Referring to FIG. 17 and FIG. 18, an embodiment of the present disclosure provides a display apparatus (equivalent to the full-screen display apparatus in First embodiment). The display apparatus comprises a glass substrate 10 (the glass substrate 10 is a specific implementation of the light-transmitting substrate 10 in First embodiment), an inkjet printing layer 11 (equivalent to the inkjet printing layer 20 in First embodiment), a conductive silver paste layer 12 (the conductive silver paste layer 12 is a specific implementation of the light-transmitting conductive member 81 in First embodiment), and a backlight module 13 (equivalent to the backlight module 40 in First embodiment). The inkjet printing layer 11 is formed at the back surface of the glass substrate 10 through inkjet printing and at least comprises a light-transmitting touch control pattern 111 (equivalent to the touch control pattern 22 in First embodiment). The conductive silver paste layer 12 at least partially covers the touch control pattern 111. The backlight module 13 is spaced apart from the glass substrate 10 and is at a same side of the glass substrate 10 as the conductive silver paste layer 12. The light emitted from the backlight module 13 is capable of transmitting through the conductive silver paste layer 12 to illuminate the touch control pattern 111.

The display apparatus may form a housing of an electrical device using the display apparatus and may be used for touching by the user. In an exemplary embodiment of the present disclosure, the glass substrate 10 of the display apparatus is used for touching by the user, and the glass substrate 10 serves as a support base for the inkjet printing layer 11 and the conductive silver paste layer 12 to protect the conductive silver paste layer 12 and the inkjet printing layer 11.

In the embodiments of the present disclosure, a specific type of inkjet printing process, in which the inkjet printing layer 11 is formed at the back surface of the glass substrate 10, is not limited. In some exemplary embodiments, the inkjet printing process is UV inkjet printing. The UV inkjet printing uses the principle of piezoelectric inkjet. The inkjet printing layer is formed by directly printing inks in all kinds of colors on a surface of the glass and then irradiating the ink by ultraviolet light. In other embodiments, the inkjet printing process is a thermal dye sublimation process. In the thermal dye sublimation process, the inks in all kinds of colors are printed on the surface of the glass and heated, after cooling, the ink is solidified to form the inkjet printing layer.

Various kinds of light-transmitting touch control patterns 111 are provided. For example, the light-transmitting touch control pattern 111 comprises an icon indicating an operation state of the display apparatus in use or a touch control pattern 111 instructing an operator to operate, and the like. In the embodiments of the present disclosure, a size, color, thickness, and specific pattern of the light-transmitting touch control pattern 111 are not limited. It can be understood that the touch control pattern 111 is not limited to a pattern in a narrow sense. In some embodiments of the present disclosure, the touch control pattern 111 comprises a text. In some other embodiments of the present disclosure, the touch control pattern 111 comprises a combination of a text and a pattern. For the color of the touch control pattern 111, in some embodiments of the present disclosure, a colorful light-transmitting material is used to be printed at the back surface of the glass substrate 10 to form a colorful touch control pattern 111, and when the light emitted from the backlight module 13 irradiates the light-transmitting touch control pattern 111, the touch control pattern 111 is presented in multicolor. In some other embodiments of the present disclosure, a position of the touch control pattern 111 is reserved in the glass substrate 10, and materials are painted at other positions of the glass substrate 10 to form a transparent touch control pattern 111. At this time, the touch control pattern 111 is presented in the color of the glass substrate 10. When the light emitted by the backlight module 13 is colored light, the touch control pattern 111 is a superimposed color presented after the colored light is superimposed on the glass substrate 10.

The conductive silver paste layer 12 is corresponding to the touch control pattern 111. The conductive silver paste layer 12 is capable of transmitting an electrical signal when the operator touches a part of the glass substrate 10 corresponding to the touch control pattern 111. For example, when the conductive silver paste layer 12 is electrically connected to the elastic electric conductor 15 (corresponding to the elastic electric conductor 83 in First embodiment) referred to in subsequent contents of this embodiment, and the elastic electric conductor 15 is electrically connected to the electric control board 14 ( equivalent to the electric control board 82 in First embodiment), a conductive path is formed by the operator, the conductive silver paste layer 12, the elastic electric conductor 15, and the electric control board 14. In some embodiments of the present disclosure, the conductive silver paste layer 12 is formed at the back surface of the glass substrate 10 through the silk screen printing process.

The inkjet printing layer 11 in the display apparatus is molded at the back surface of the glass substrate 10 using the inkjet printing process, which reduces the cost of the display apparatus. At the same time, the display apparatus uses the conductive silver paste layer 12 to transmit the electrical signals. The conductive silver paste layer 12 is inexpensive. For example, the conductive silver paste layer 12 is more inexpensive than an indium tin oxide (ITO) membrane. The cost of the display apparatus is further reduced.

Referring to FIG. 17, in some embodiments of the present disclosure, the display apparatus further comprises an electric control board 14. The electric control board 14 is electrically connected to the backlight module 13 and the conductive silver paste layer 12.

The electric control board 14 is electrically connected to the conductive silver paste layer 12. At this time, the conductive silver paste layer 12 may form a capacitance with air. After the operator touches the glass substrate 10 at the touch control pattern 111, the human body forms a capacitance with the conductive silver paste layer 12 and the capacitance discharges, i.e., the human body is used as an conductor and is grounded to enable the human body and the conductive silver paste layer 12 which are equivalent to the capacitance to discharge, and the electric control board 14 receives a current transmitted by the conductive silver paste layer 12 and then controls the device using the display apparatus to perform the corresponding function.

Referring to FIG. 17, in some embodiments of the present disclosure, the display apparatus further comprises an elastic electric conductor 15. The elastic electric conductor 15 has one end abutting against the electric control board 14 and electrically connected to the electric control board 14, and another end abutting against the conductive silver paste layer 12 and electrically connected to the conductive silver paste layer 12. In this way, an electrical connection of the electric control board 14 and the conductive silver paste layer 12 is realized, and the stability of the electrical connection between the conductive silver paste layer 12, the elastic electric conductor 15, and the electric control board 14 can also be effectively maintained.

The elastic electric conductor 15 is configured to be electrically connected to the electric control board 14 and the conductive silver paste layer 12 to realize transmission of a current from the conductive silver paste layer 12 to the electric control board 14.

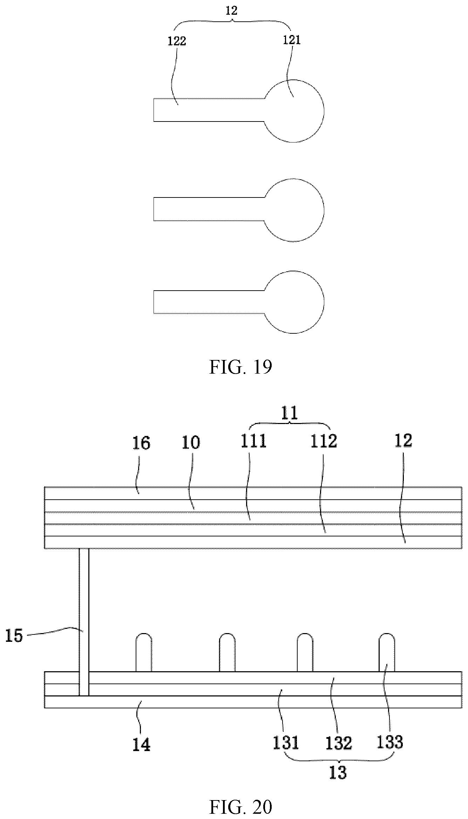

Referring to FIG. 17 and FIG. 19, the materials of the conductive silver paste layer 12 and the bonding pad are difficult to produce elastic deformation and are used in the embodiments of the present disclosure. In some embodiments of the present disclosure, a plurality of the elastic electric conductors 15 is provided, a plurality of conductive silver paste layers 12 and a plurality of touch control patterns 111 are provided. The conductive silver paste layers 12 correspond to the touch control patterns 111 in one-to-one correspondence. Each conductive silver paste layer 12 comprises a light-transmitting portion 121 (equivalent to the light-transmitting portion 141 of Second embodiment) and a power connection portion 122 (equivalent to the power connection portion 142 in Second embodiment), and each light-transmitting portion 121 covers the corresponding touch control pattern 111. The elastic electric conductors 15 correspond to the conductive silver paste layers 12 in one-to-one correspondence. Each elastic electric conductor 15 is electrically connected to a power connection portion 122 of the corresponding conductive silver paste layer 12, and further abuts against the power connection portion 122.

The light-transmitting portion 121 is corresponding to the touch control pattern 111. When the operator touches the glass substrate 10 corresponding to the light-transmitting portion 121, an electrical path is formed between the operator, the light-transmitting portion 121, the power connection portion 122, the elastic electric conductor 15, and the electric control board 14 to trigger a key module on the electric control board 14 to generate a key-press signal, and the key-press signal is transmitted to a control system of the household appliance using the display apparatus, to control the household appliance to perform the corresponding function.

In some embodiments of the present disclosure, the light-transmitting portion 121 partially covers the corresponding touch control pattern 111. At this time, an area of the light-transmitting portion 121 is greater than an area of the touch control pattern 111. Even if the operator fails to accurately touch the corresponding touch control pattern 111, the display apparatus may still discharge current, to cause the electric control board 14 to control the device using the display apparatus to perform the corresponding function. In other embodiments of the present disclosure, the light-transmitting portion 121 covers the corresponding touch control pattern 111. In this way, an amount of conductive silver paste can be reduced, and the cost of the display apparatus can be lowered. Moreover, an area of the glass substrate 10 covered by the light-transmitting portion 121 can be reduced, improving a brightness of the display apparatus.

The power connection portion 122 is configured to be connected to the light-transmitting portion 121 and the elastic electric conductor 15.

In some embodiments of the present disclosure, the electric control board 14 has a plurality of pins. Each elastic electric conductor 15 is electrically connected to one pin. The plurality of elastic electric conductors 15 is connected to the plurality of pins in one-to-one correspondence. Alternatively, each elastic electric conductor 15 is electrically connected to a plurality of pins, realizing a one-to-many connection of the elastic electric conductors 15 and the pins. In this way, when the operator touches the glass substrate 10 at each touch control pattern 111, the conductive silver paste layer 12 corresponding to touch control pattern 111, the elastic electric conductor 15, and the pins may transmit electrical signals in an orderly and independent manner.

The plurality of elastic electric conductors 15 are connected to a plurality of different pins (e.g., bonding pads) of the electric control board 14. In this way, when a plurality of operators touches the glass substrate 10 at different touch control patterns 111, the electric control board 14 controls the device using the display apparatus to perform different kinds of functions. In other embodiments of the present disclosure, one elastic electric conductor 15 is connected to a plurality of pins of the electric control board 14. In this way, when the operator touches the glass substrate at the touch control pattern 111 corresponding to the elastic electric conductor 15, the electric control board 14 may control the device using the display apparatus to perform a plurality of functions simultaneously. For example, when the display apparatus is applied in a water boiler, the operator may realize functions of water loading and heating simultaneously by touching one touch control pattern.

To facilitate the connection of the elastic electric conductor 15 to the electric control board 14, in some embodiments of the present disclosure, the electric control board 14 is provided with a bonding pad abutting against the elastic electric conductor 15.

The bonding pad is a basic component unit attached to and mounted at a surface of the electric control board 14, and is used to form a bonding pad pattern of a circuit board, i.e., the bonding pad is used to realize the connection between the elastic electric conductor 15 and the electric control board 14. When the elastic electric conductor 15 is the spring or metal elastic sheet, a strength of the connection between the elastic electric conductor 15 and the bonding pad may be strengthened through tin soldering.

To strengthen the strength of the connection between the elastic electric conductor 15 and the conductive silver paste layer 12 and the strength of the connection between the elastic electric conductor 15 and the bonding pad, in some embodiments of the present disclosure, the elastic electric conductor 15 is in an interference fit with the bonding pad and the conductive silver paste layer 12.

Referring to FIG. 18, in some embodiments of the present disclosure, the inkjet printing layer 11 further comprises a light-transmitting background pattern 112 (equivalent to the background pattern 21 in First embodiment). The light-transmitting background pattern 112 and the touch control pattern 111 are printed at the back surface of the glass substrate 10, and the light emitted by the backlight module 13 is capable of illuminating the light-transmitting background pattern 112.

The light-transmitting background pattern 112 may emerge under the illumination of the light emitted from the backlight module 13. The light-transmitting background pattern 112 may be an aesthetic pattern only, or may be an icon for indicating the operation state of the display apparatus in use. Moreover, the light-transmitting background pattern 112 may be formed at the back surface of the glass substrate 10 by using UV inkjet printing or thermal dye sublimation.

In some embodiments of the present disclosure, the glass substrate 10 has a light transmittance greater than or equal to 40% and smaller than or equal to 60%.

With the above embodiments, in a case where the light transmittance of the glass substrate 10 is within this range, when the display apparatus is in a scree-off state, the glass substrate 10 is presented in a black and lighttight state, to shield and hide the touch control pattern 111 formed at the glass substrate 10 through inkjet printing, i.e., the operator may only observe the black glass substrate 10 and may not see the electric control board 14, the backlight module 13, and the like at an inner side of the glass substrate 10. In this way, when the display apparatus is in the scree-off state, the display apparatus has a good consistency in visual effect. In a specific embodiment of the present disclosure, the light transmittance of the glass substrate 10 is 50%. The light transmittance represents an ability of light transmitting through a medium, and is a percentage of luminous flux transmitting through a transparent body or a semitransparent body and its incident luminous flux. The light transmittance may indicate efficiency of the light transmitting through the display apparatus and the like, which directly affects a visual effect of the touch screen. For example, when parallel monochromatic light transmits through a uniform and non-scattering medium, a part of the light is absorbed, a part of the light transmits through the medium, and a part of the light is reflected by a surface of the medium.

Referring to FIG. 17, in some other embodiments of the present disclosure, the glass substrate 10 has an electroplated layer 16 formed at the front surface of the glass substrate 10. Alternatively, in yet another embodiment of the present disclosure, the glass substrate 10 has a light transmittance equal to or greater than 40% and smaller than or equal to 60%, and the glass substrate 10 further has an electroplated layer 16 formed at the front surface of the glass substrate 10. Each of the foregoing embodiments may have a same effect as in a case where the glass substrate 10 has the light transmittance equal to or greater than 40% and smaller than or equal to 60%. In addition, since electroplating may enhance corrosion resistance, hardness, wear resistance of an electroplated body, and improve conductivity, smoothness, heat resistance, and the like of the electroplated body, after the electroplated layer 16 is formed at the front surface of the glass substrate 10, the smooth electroplated layer 16 facilitates swiping of the operator's finger on the display apparatus, and the strong hardness, corrosion resistance, and wear resistance provide protection for the glass substrate 10.

In some embodiments of the present disclosure, a thickness of the electroplated layer 16 is 1 µm. For a material of the electroplated layer 16, in some embodiments of the present disclosure, the electroplated layer 16 may be formed by electroplating of a mixed material, such as mixed electroplating of gold and silver and mixed electroplating of zinc and silver. In other embodiments of the present disclosure, the electroplated layer 16 may be formed with a single material, like formed by electroplating of copper or zinc. For an electroplating process of the electroplated layer 16, in some embodiments of the present disclosure, the electroplated layer 16 may be formed through a barrel plating process; in other embodiments of the present disclosure, the electroplated layer 16 may be formed through a rack plating process.

Referring to FIG. 18, in some embodiments of the present disclosure, the inkjet printing layer 11 further comprises a light-shielding layer 113 (equivalent to the light-shielding layer 30 in First embodiment). The light-shielding layer 113 is disposed at the back surface of the glass substrate 10, and the light-shielding layer 113 has a light-transmitting region at a position of the light-shielding layer 113 corresponding to the touch control pattern 111 and the light-transmitting background pattern 112.

The light-shielding layer 113 is used to cooperate with the light-transmitting background pattern 112 and the touch control pattern 111, to cover other regions of the inkjet printing layer 11 except for the light-transmitting background pattern 112 and the touch control pattern 111, preventing the light emitted by the backlight module 13 from transmitting through these regions. In this way, when the backlight module 13 emits light, the light-transmitting background pattern 112 and the touch control pattern 111 are illuminated by the light emitted from the backlight module 13 to contrast with the regions covered by the light-shielding layer 113.

Since the light emitted by the backlight module 13 is mixed light, in order to improve an ability of the light-shielding layer 113 shielding the light, in some embodiments of the present disclosure, the light-shielding layer 113 is formed at the glass substrate 10 through silk-screen printing with black ink. In this way, the black light-shielding layer 113 is capable of absorbing light in various colors, regardless of whether the light emitted by the backlight module 13 is mixed light or monochromatic light.

Except for the light-shielding layer 13 being formed at the back surface of the glass substrate 10 through inkjet printing, in some embodiments of the present disclosure, the light-shielding layer 113 may be formed at the back surface of the glass substrate 10 through silk-screen printing. Except for the light-shielding layer 13 being formed at the back surface of the glass substrate 10, in some embodiments of the present disclosure, the light-shielding layer 113 may be formed at the front surface of the glass substrate 10.

Referring to FIG. 17, in some embodiments of the present disclosure, the backlight module 13 comprises a lamp panel support 131 (equivalent to the lamp panel support 41 in First embodiment) and a lamp panel 132 (equivalent to the lamp panel 42 in First embodiment). The lamp panel support 131 is disposed between the glass substrate 10 and the electric control board 14, and has a through hole 1311 for the elastic electric conductor 15 to pass through. The lamp panel 132 is disposed at the lamp panel support 131 and electrically connected to the electric control board 14. The lamp panel 132 is provided with a plurality of lamp sources 133 (equivalent to the lamp source 43 in First embodiment), and the light emitted from the lamp source 133 illuminates the touch control pattern 111 after transmitting through the conductive silver paste layer 12.

The lamp panel support 131 is used for mounting the lamp panel 132. In some embodiments of the present disclosure, the lamp panel support 131 is made of an insulation material, like insulation rubber, plastic, or ceramic. In this way, the electric control board 14 and the lamp panel support 131 can be prevented from having direct passing of current between the two, which improves safety of the display apparatus.

The through hole 1311 is used for allowing the elastic electric conductor 15 to pass through, which facilitates that the elastic electric conductor 15 is connected to the electric control board 14 and the conductive silver paste layer 12.

The lamp panel 132 is used for mounting the lamp source 133. In order to improve the utilization rate of the light emitted from the lamp panel 132, the lamp panel support 131 is provided with a light reflection layer at a side of the lamp panel support 131 close to the glass substrate 10. In some embodiments of the present disclosure, the light reflection layer may be a light reflection film. In other embodiments of the present disclosure, the light reflection layer may be formed with a light reflection material through inkjet printing.

The lamp source 133 is configured to emit light. In some embodiments of the present disclosure, the lamp source 133 is an LED lamp, and emits white light. In this way, the white light is irradiated to the colored background pattern 112 or the colored touch control pattern 111, which can directly show an original color of each of the background pattern 112 and the touch control pattern 111, without the need to consider a case where the colored light and the colored background pattern or the colored touch control pattern 111 are mixed to be in other colors when the light emitted by the lamp source 133 is colorful.

### Fourth embodiment

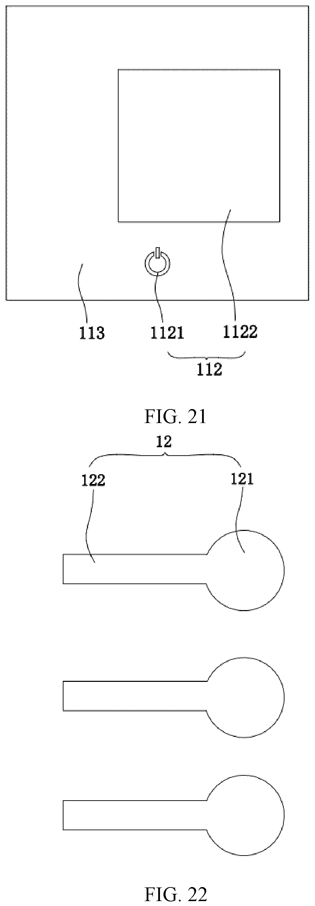

In some embodiments of the present disclosure, referring to FIG. 20 and FIG. 21, an embodiment of the present disclosure provides a display apparatus (equivalent to the full-screen display apparatus in First embodiment), comprising a glass substrate 10 (the glass substrate 10 is a specific implementation of the light-transmitting substrate 10 in First embodiment), a display film 11 (the display film 11 comprises the inkjet printing layer 20 and light-shielding layer 30 in First embodiment), a conductive silver paste layer 12 (the conductive silver paste layer 12 is a specific implementation of the light-transmitting conductive member 81 in First embodiment), and a backlight module 13 (equivalent to the backlight module 40 in First embodiment). The display film 11 is disposed at the back surface of the glass substrate 10, and at least comprises a light-transmitting touch control pattern 1121 (equivalent to the touch control pattern 22 in First embodiment). The conductive silver paste layer 12 covers the touch control pattern 1121. The backlight module 13 and the glass substrate 10 are spaced apart from each other. The backlight module 13 and the conductive silver paste layer 12 are located at a same side of the glass substrate 10. The light emitted from the backlight module 13 is capable of transmitting through the conductive silver paste layer 12 to illuminate the touch control pattern 1121.

The display apparatus may form a housing of an electrical device using the display apparatus and may be used for touching by the user. In an exemplary embodiment of the present disclosure, the glass substrate 10 of the display apparatus is used for touching by the user, and the glass substrate 10 serves as a support base for the display film 11 and protects the display film 11. In the embodiments of the present disclosure, the size and thickness of the glass substrate 10, and the connection manner of the glass substrate 10 with the device housing are not limited, as long as the glass substrate 10 is capable of being touched by the operator to control the device using the display apparatus to perform the corresponding function.

The light-transmitting touch control pattern 1121 comprises a variety of types. For example, the light-transmitting touch control pattern 111 comprises an icon indicating an operation state of the display apparatus in use or a touch control pattern 1121 that instructs the operator to operate, and the like. It can be understood that the touch control pattern 1121 is not limited to the pattern in a narrow sense. In some embodiments of the present disclosure, the touch control pattern 1121 comprises a text. In other embodiments of the present disclosure, the touch control pattern 1121 comprises a combination of a text and a pattern. For the color of the touch control pattern 111, in some embodiments of the present disclosure, the colorful light-transmitting material is used to be formed at the display film 11 to form the colorful touch control pattern 111, and the light emitted from the backlight module 13 irradiates the light-transmitting touch control pattern 1121, making the touch control pattern 1121 be presented in multicolor. In some other embodiments of the present disclosure, the touch control pattern 1121 may be in white, the shape of the touch control pattern 1121 is reserved on the display film 11, and materials are printed at other positions of the display film 11 to form the transparent touch control pattern 111. At this time, the touch control pattern 111 presents the color of the display film 11. When the light emitted from the backlight module 13 is white light, the touch control pattern 1121 is presented in white. When the light emitted by the backlight module 13 is colored light, the touch control pattern 1121 appears in corresponding multicolor.

The conductive silver paste layer 12 is corresponding to the touch control pattern 111, and the conductive silver paste layer 12 is capable of transmitting an electrical signal when the operator touches a position of the glass substrate 10 corresponding to the touch control pattern 111. For example, when the conductive silver paste layer 12 is electrically connected to the elastic electric conductor 15 mentioned in the subsequent contents of the present disclosure, and the elastic electric conductor 15 is electrically connected to the electric control board 14, the conductive path is formed between the operator, the conductive silver paste layer 12, the elastic electric conductor 14, and the electric control board 15. In some embodiments of the present disclosure, the conductive silver paste layer 12 is molded through the silk screen printing process at the back surface of the glass substrate 10 and covers the touch control pattern 1121.

By providing the light-transmitting touch control pattern 1121 on the display film 11 in advance, and then providing the display film 11 at the back surface of the glass substrate 10, assembly efficiency of the display apparatus is improved, and the glass substrate 10 at an outer side may protect the display film 11 located at the back surface of the glass substrate 10. The conductive silver paste layer 12 is used to form a capacitance with the human body and the capacitance discharges when the operator touches the glass substrate 10, and the backlight module 13 is configured to emit light to transmit through the conductive silver paste layer 12 and illuminate the touch control pattern 1121, which facilitates that the operator can observe information presented on the display apparatus more clearly.

Referring to FIG. 20 and FIG. 21, in some embodiments of the present disclosure, the display film 11 comprises a transparent substrate layer 111 (equivalent to the transparent substrate layer 12 in First embodiment), an inkjet printing layer 112 (equivalent to the inkjet printing layer 20 in First embodiment), and a light-shielding layer 113 (equivalent to the light-shielding layer 30 in First embodiment). The transparent substrate layer 111 is disposed at the back surface of the glass substrate 10. The inkjet printing layer 112 is formed at a back surface of the transparent substrate layer 111, and at least comprises the light-transmitting touch control pattern 1121. The light-shielding layer 113 is disposed at a front surface or the back surface of the transparent substrate layer 111, and has a light-transmitting region at a position of the light-shielding layer 113 corresponding to the touch control pattern 1121 and the background pattern 1122.

The light-shielding layer 113 is used to cooperate with the inkjet printing layer 112 to cover the region of the glass substrate 10 that is not covered by the inkjet printing layer 112, preventing the light emitted by the backlight module 13 from transmitting through the region. In this way, when the backlight module 13 emits light, the inkjet printing layer 112 is illuminated by the light emitted by the backlight module 13 to contrast with the region covered by the light-shielding layer 113.

Since the light emitted by the backlight module 13 is mixed light, in order to improve the ability of the light-shielding layer 113 shielding the light, in some embodiments of the present disclosure, the light-shielding layer 113 is formed at the glass substrate 10 through silk-screen printing with black ink. In this way, the black light-shielding layer 113 is capable of absorbing the light in various colors, regardless of whether the light emitted by the backlight module 13 is the mixed light or monochromatic light.

Referring to FIG. 21, in some embodiments of the present disclosure, the display film 11 further comprises a light-transmitting background pattern 1122 (equivalent to the background pattern 21 in First embodiment), and the light-transmitting background pattern 1122 and the touch control pattern 1121 are both printed at the back surface of the transparent substrate layer 111.

The light-transmitting background pattern 1122 may show the pattern under the irradiation of the light emitted by the backlight module 13, and the light-transmitting background pattern 1122 may be a pattern used for beautifying an appearance of the display apparatus or an icon for indicating the operation state of the display apparatus. Moreover, the light-transmitting background pattern 1122 may be printed at the back surface of the transparent substrate layer 111 through ultra-violet (UV) inkjet printing or thermal dye sublimation inkjet printing.

In some embodiments of the present disclosure, the light-shielding layer 113 is bonded to the back surface of the glass substrate 10 when the light-shielding layer 113 is disposed at the front surface of the transparent substrate layer 111. The transparent substrate layer 111 is bonded to the back surface of the glass substrate 10 when the light-shielding layer 113 is disposed at the back surface of the transparent substrate layer 111.

With the above technical solution, when the light-shielding layer 113 is disposed at the front surface of the transparent substrate layer 111, the light-shielding layer 113 is bonded to the back surface of the glass substrate 10. In this way, the light-shielding layer 113 is sandwiched between the glass substrate 10 and the transparent substrate layer 111 such that the light-shielding layer 113 is protected. When the light-shielding layer 113 is disposed at the back surface of the transparent substrate layer 111, the transparent substrate layer 111 is bonded to the back surface of the glass substrate 10. In this way, the transparent substrate layer 111 is disposed between the glass substrate 10 and the light-shielding layer 113, i.e., when the display film 11 is connected to the glass substrate layer, it is that the transparent substrate layer 111 is connected to the glass substrate 10, which prevents the light-shielding layer 113 from being damaged when the glass substrate 10 is connected to the display film 11, and reduces the process difficulty during the connection between the display film 11 and the glass substrate 10.

Referring to FIG. 20, in some embodiments of the present disclosure, the display apparatus further comprises an electric control board 14 (equivalent to the electric control board 82 in First embodiment) and an elastic electric conductor 15 (equivalent to the elastic electric conductor 83 in First embodiment). The electric control board 14 is electrically connected to the backlight module 13. The elastic electric conductor 15 has one end abutting against the electric control board 14 to realize the electrical connection with the electric control board 14, and another end abutting against the conductive silver paste layer 12 to realize the electrical connection with the conductive silver paste layer 12.

The electric control board 14 is electrically connected to the conductive silver paste layer 12. At this time, the conductive silver paste layer 12 and the air form a capacitance. After the operator touches the glass substrate 10 at the touch control pattern 1121, the human body and the conductive silver paste layer 12 form a capacitance and the capacitance discharges, i.e., the human body serves as an electric conductor and is grounded, to enable the human body and the conductive silver paste layer 12 which are equivalent to the capacitance to discharge. The electric control board 14 is configured to control the device using the display apparatus to perform the corresponding function after receiving the current transmitted by the conductive silver paste layer 12.

The elastic electric conductor 15 is configured to be electrically connected to the electric control board 14 and the conductive silver paste layer 12 to realize the transmission of the current from the conductive silver paste layer 12 to the electric control board 14.

Referring to FIG. 20 and FIG. 22, in some embodiments of the present disclosure, the conductive silver paste layer 12 comprises a light-transmitting portion 121 (corresponding to the light-transmitting portion 141 in Second embodiment) and a power connection portion 122 (corresponding to the power connection portion 142 in Second embodiment). The light-transmitting portion 121 covers the touch control pattern 1121. The power connection portion 122 abuts against and is electrically connected to the elastic electric conductor 15.

The light-transmitting portion 121 is corresponding to the touch control pattern 1121. When the operator touches the glass substrate 10 corresponding to the light-transmitting portion 121, the electrical path is formed between the operator, the light-transmitting portion 121, the power connection portion 122, the elastic electric conductor 15, and the electric control board 14, to trigger the key module on the electric control board 14 to generate a key-press signal, and the key-press signal is transmitted to the control system of the household appliance that uses the display apparatus, to control the household appliance to perform the corresponding function.

In some embodiments of the present disclosure, the light-transmitting portion 121 partially covers the corresponding touch control pattern 1121. At this time, the area of the light-transmitting portion 121 is greater than the area of the touch control pattern 1121. Even if the operator fails to accurately touch the corresponding touch control pattern 1121, the display apparatus can still discharge the current, to cause the electric control board 14 to control the device using the display apparatus to perform the corresponding function. In other embodiments of the present disclosure, the light-transmitting portion 121 covers the corresponding touch control pattern 1121. In this way, the amount of conductive silver paste can be reduced and the cost of the display apparatus can be lowered, and the area of the glass substrate 10 covered by the light-transmitting portion 121 can be reduced, improving the brightness of the display apparatus.

In some embodiments of the present disclosure, the electric control board 14 has a plurality of pins. Each elastic electric conductor 15 is electrically connected to one pin. The plurality of elastic electric conductors 15 is connected to the plurality of pins in one-to-one correspondence. Alternatively, each elastic electric conductor 15 is electrically connected to a plurality of pins, realizing the one-to-many connection of the elastic electric conductor 15 and the pins. In this way, when the operator touches the glass substrate 10 at each touch control pattern 111, the conductive silver paste layer 12 corresponding to touch control pattern 111, the elastic electric conductor 15, and the pins may transmit the electrical signals in an orderly and independent manner.

The plurality of elastic electric conductors 15 are connected to the plurality of different pins of the electric control board 14. In this way, when the plurality of operators touches the glass substrate 10 at different touch control patterns 111, the electric control board 14 controls the device using the display apparatus to perform different kinds of functions. In other embodiments of the present disclosure, one elastic electric conductor 15 is connected to a plurality of pins of the electric control board 14. In this way, when the operator touches the glass substrate at the touch control pattern 111 corresponding to the elastic electric conductor 15, the electric control board 14 may control the device using the display apparatus to perform the plurality of functions simultaneously. For example, when the display apparatus is applied in the water boiler, the operator may realize the functions of water loading and heating simultaneously by touching the one touch control pattern.

In some embodiments of the present disclosure, the electric control board 14 is provided with a bonding pad abutting against the elastic electric conductor, and the elastic electric conductor 15 is in an interference fit with the bonding pad and the power connection portion 122.

The bonding pad is the basic component unit attached to and mounted at the surface of the electric control board 14, and is used to form the bonding pad pattern of the circuit board, i.e., the bonding pad is used to realize the connection between the elastic electric conductor 15 and the electric control board 14. When the elastic electric conductor 15 is the spring or metal elastic sheet, the strength of the connection between the elastic electric conductor 15 and the bonding pad may be strengthened through tin soldering.

To strengthen the strength of the connection between the elastic electric conductor 15 and the conductive silver paste layer 12 and the strength of the connection between the elastic electric conductor 15 and the bonding pad, in some embodiments of the present disclosure, the elastic electric conductor 15 is in an interference fit with the bonding pad and the conductive silver paste layer 12.

In some embodiments of the present disclosure, the glass substrate 10 has a light transmittance greater than or equal to 40% and smaller than or equal to 60%.

With the above embodiments, in a case where the light transmittance of the glass substrate 10 is within this range, when the display apparatus is in the scree-off state, the glass substrate 10 is presented in the black and lighttight state, to shield and hide the touch control pattern 1121 printed at the glass substrate 10, i.e., the operator may only observe the black glass substrate 10 and may not see the electric control board 14, the backlight module 13, and the like at the inner side of the glass substrate 10. In this way, when the display apparatus is in the scree-off state, the display apparatus has a good consistency in visual effect. In a specific embodiment of the present disclosure, the light transmittance of the glass substrate 10 is 50%. The light transmittance represents an ability of light transmitting through the medium, and is a percentage of luminous flux transmitting through a transparent body or a semitransparent body and its incident luminous flux. The light transmittance may indicate the efficiency of the light transmitting through the display apparatus and the like, which directly affects the visual effect of the touch screen. For example, when the parallel monochromatic light transmits through a uniform and non-scattering medium, a part of the light is absorbed, a part of the light transmits through the medium, and a part of the light is reflected by the surface of the medium.

Referring to FIG. 20, in some other embodiments of the present disclosure, the glass substrate 10 has the electroplated layer 16 formed at the front surface of the glass substrate 10. Alternatively, in yet another embodiment of the present disclosure, the glass substrate 10 has a light transmittance equal to or greater than 40% and smaller than or equal to 60%, and the glass substrate 10 further has the electroplated layer 16 formed at the front surface of the glass substrate 10. Each of the foregoing both embodiments may have the same effect as that in the case where the glass substrate 10 has a light transmittance equal to or greater than 40% and smaller than or equal to 60%. In addition, since the electroplating may enhance the corrosion resistance, hardness, wear resistance of the electroplated body, and improve the conductivity, smoothness, heat resistance, and the like of the electroplated body, after the electroplated layer 16 is formed at the front surface of the glass substrate 10, the smooth electroplated layer 16 facilitates the swiping of the operator's finger on the display apparatus, and the strong hardness, corrosion resistance, and wear resistance provide protection for the glass substrate 10.

Referring to FIG. 20, in some embodiments of the present disclosure, the backlight module 13 comprises a lamp panel support 131 (equivalent to the lamp panel support 41 in First embodiment) and a lamp panel 132 (equivalent to the lamp panel 42 in First embodiment). The lamp panel support 131 is disposed between a display film layer and the electric control board 14. The lamp panel 132 is disposed at the lamp panel support 131 and is electrically connected to the electric control board 14, and has a plurality of lamp sources 133 (equivalent to the lamp source 43 in First embodiment) provided thereon. The light emitted from the lamp sources 133 illuminates the touch control pattern 1121 after transmitting through the conductive silver paste layer 12.

To facilitate the connection between the elastic electric conductor 15 and the electric control board 14, in some embodiments of the present disclosure, the lamp panel support 131 has a through hole, and the elastic electric conductor 15 passes through the through hole and is connected to the electric control board 14.

The lamp panel 132 is used for mounting the lamp source 133. In order to improve the utilization rate of the light emitted from the lamp panel 132, the lamp panel support 131 is provided with a light reflection layer at one side of the lamp panel support 131 close to the glass substrate 10. In some embodiments of the present disclosure, the light reflection layer may be a light reflection film. In other embodiments of the present disclosure, the light reflection layer may be formed through inkjet printing with the light reflection material.

The lamp source 133 is configured to emit light. In some embodiments of the present disclosure, the lamp source 133 is an LED lamp, and emits white light. In this way, the white light is irradiated to the colored background pattern 1122 or the colored touch control pattern, which can directly show the original color of each of the background pattern 1122 and the touch control pattern, without the need to consider the case where the colored light and the colored background pattern 1122 or the colored touch control pattern are mixed to be in other colors when the light emitted by the lamp source 133 is colorful.

### Fifth embodiment

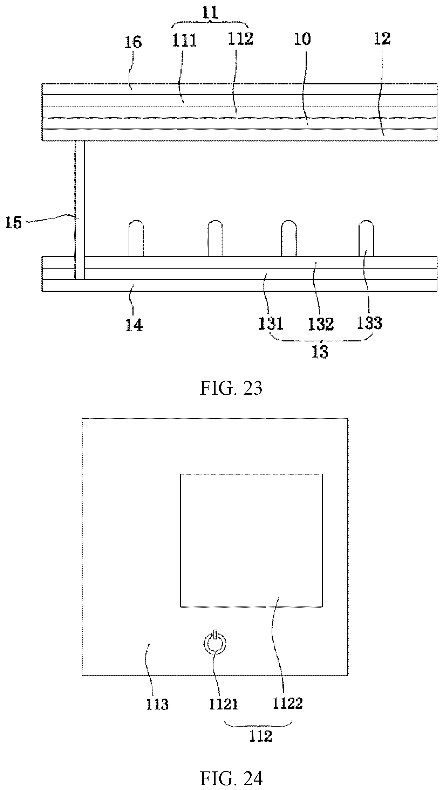

Referring to FIG. 23 and FIG. 24, this embodiment provides a display apparatus (equivalent to the full-screen display apparatus in First embodiment), comprising a plastic substrate 10 (the plastic substrate 10 is a specific implementation of the light-transmitting substrate 10 in First embodiment) that is light-transmissive, a display film 11 (the display film 11 comprises the inkjet printing layer 20 and the light-shielding layer 30 in First embodiment), a conductive silver paste layer 12 (the conductive silver paste layer 12 is a specific implementation of the light-transmitting conductive member 81 in First embodiment), and the backlight module 13 (equivalent to the backlight module 40 in First embodiment). The display film 11 is disposed at the front surface of the plastic substrate 10, and at least comprises a light-transmitting touch control pattern 1121 (equivalent to the touch control pattern 22 in First embodiment). The conductive silver paste layer 12 covers the touch control pattern 1121. The backlight module 13 and the plastic substrate 10 are spaced apart from each other. The backlight module 13 and the conductive silver paste layer 12 are located at a same side of the plastic substrate 10. The light emitted from the backlight module 13 is capable of transmitting through the conductive silver paste layer 12 and the plastic substrate 10 to illuminate the touch control pattern 1121.

The display apparatus may form the housing of the electrical device using the display apparatus and may be used for touching by the user. In an exemplary embodiment of the present disclosure, the display film of the display apparatus is used for touching by the user, and the plastic substrate 10 serves as a touch screen of the display apparatus, is connected to the device using the display apparatus, serves as part of the housing of the device, serves as the support base for the display film 11 and protects the display film 11.

The light-transmitting touch control pattern 1121 comprises a variety of types. For example, the light-transmitting touch control pattern 111 comprises the icon indicating the operation state of the display apparatus in use or the touch control pattern 1121 that instructs the operator to operate, and the like. It can be understood that the touch control pattern 1121 is not limited to the pattern in a narrow sense. In some embodiments of the present disclosure, the touch control pattern 1121 comprises a text. In other embodiments of the present disclosure, the touch control pattern 1121 comprises a combination of a text and a pattern. For the color of the touch control pattern 111, in some embodiments of the present disclosure, the colorful light-transmitting material is used to be formed at the display film 11 to form the colorful touch control pattern 111, and the light emitted from the backlight module 13 irradiates the light-transmitting touch control pattern 1121, making the touch control pattern 1121 be presented in multicolor. In some other embodiments of the present disclosure, the touch control pattern 1121 may be in white, the shape of the touch control pattern 1121 is reserved on the display film 11, and materials are printed at other positions of the display film 11 to form the transparent touch control pattern 111. At this time, the touch control pattern 111 presents the color of the display film 11. When the light emitted from the backlight module 13 is white light, the touch control pattern 1121 is presented in white. When the light emitted by the backlight module 13 is colorful light, the touch control pattern 1121 appears in corresponding multicolor.

The light-transmitting plastic substrate 10 facilitates the attachment of the display film 11 to the surface of the plastic substrate 10, which lowers the process difficulty during the assembly of the display apparatus. Moreover, after the light-transmitting touch control pattern 1121 is disposed at the display film 11 in advance, the display film 11 is disposed at the front surface of the plastic substrate 10 that is light-transmissive. In this way, the process difficulty during the assembly of the display apparatus is further lowered. Meanwhile, when the display film 11 is disposed at the front surface of the plastic substrate 10 that is light-transmissive, the conductive silver paste layer 12 is connected to the plastic substrate 10, which has a simpler process than the connection between the conductive silver paste layer 12 and the display film 11, and avoids the possible influence on the touch control pattern 1121 on the display film 11 during the connection of the conductive silver paste layer 12 and the display film 11, improving reliability of the display apparatus. The conductive silver paste layer is configured to form the capacitance with the human body and the capacitance discharges when the operator touches the plastic substrate 10 that is light-transmissive, and the backlight module 13 is configured to emit light to transmit through the conductive silver paste layer 12 and illuminate the touch control pattern 1121.

The light-transmitting touch control pattern 1121 is disposed at the display film 11 in advance, and then the display film 11 is disposed at the front surface of the plastic substrate 10 that is light-transmissive, improving the assembly efficiency of the display apparatus. The conductive silver paste layer is configured to form the capacitance with the human body and the capacitance discharges when the operator touches the plastic substrate 10 that is light-transmissive, and the backlight module 13 is configured to emit light to transmit through the conductive silver paste layer 12 and illuminate the touch control pattern 1121.

Referring to FIG. 24, in some embodiments of the present disclosure, the display film 11 comprises a transparent substrate layer 111 (equivalent to the transparent substrate layer 12 in First embodiment), an inkjet printing layer 112 (equivalent to the inkjet printing layer 20 in First embodiment), and a light-shielding layer 113 (equivalent to the light-shielding layer 30 in First embodiment). The transparent substrate layer 111 is disposed at the front surface of the plastic substrate 10. The inkjet printing layer 112 is formed at the back surface of the transparent substrate layer 111 through inkjet printing, and at least comprises a light-transmitting touch control pattern 1121. The light-shielding layer 113 is disposed at the front surface or back surface of the transparent substrate layer 111, and the light-shielding layer 113 has a light-transmitting region corresponding to the positions of the touch control pattern 1121 and the background pattern 1122.

The light-shielding layer 113 is used to cooperate with the inkjet printing layer 112 to cover the region of the plastic substrate 10 that is not covered by the inkjet printing layer 112, preventing the light emitted by the backlight module 13 from transmitting through the region. In this way, when the backlight module 13 emits light, the inkjet printing layer 112 is illuminated by the light emitted from the backlight module 13 to contrast with the region covered by the light-shielding layer 113.

Since the light emitted by the backlight module 13 is the mixed light, in order to improve the ability of the light-shielding layer 113 shielding the light, in some embodiments of the present disclosure, the light-shielding layer 113 is printed at the plastic substrate 10 through silk-screen printing with black ink. In this way, the black light-shielding layer 113 is capable of absorbing the light in various colors, regardless of whether the light emitted by the backlight module 13 is the mixed light or monochromatic light.

In some embodiments of the present disclosure, the transparent substrate layer 111 is a polyethylene terephthalate (PET) membrane, and the light-shielding layer 113 is an ink layer.

With the above technical solutions, the PET membrane has excellent physical properties, chemical properties, dimensional stability, transparency, and recyclability. When the display film 11 is disposed at the front surface of the plastic substrate 10, the inkjet printing layer 112 and the light-shielding layer 113, which are located at the back surface of the transparent substrate layer 111, can be effectively protected. The light-shielding layer 113 is the ink layer, which is inexpensive and lowers the cost of the display apparatus.

In some embodiments of the present disclosure, the plastic substrate 10 is made of an acrylonitrile butadiene styrene (ABS) material or a Polycarbonate (PC) material.

With the above technical solution, ABS resin has excellent impact resistance, heat resistance, low temperature resistance, chemical resistance, and electrical properties, and can effectively protect the internal structure of the display apparatus. The ABS resin also has the characteristics of easy processing, stable product dimensions, and good surface gloss, which facilitates the manufacture of the plastic substrate 10, and also allows for secondary processing such as metal spraying on the surface, electroplating, soldering, hot pressing, and bonding, facilitating the conductive silver paste layer 12 being disposed at the plastic substrate 10. PC plastic has high strength and elasticity, and strong impact resistance, and can effectively protect the internal structure of the display apparatus. The PC plastic has a high transparency, and can be free to be dyed, which is conducive to the appearance of the background pattern 1122 and the touch control pattern 1121. The PC plastic has weather ability and temperature resistance and strong wear resistance, and a long service life. The PC plastic has excellent electrical characteristics, a low molding shrinkage, and good dimensional stability, which facilitates the processing and manufacturing of the plastic substrate 10.

In some embodiments of the present disclosure, the display film 11 is attached to the plastic substrate 10 through an in-mold decoration process or an in-mold complex process.

With the above technical solution, the in-mold decoration process and the in-mold complex process are that printing, high-pressure molding, punching and cutting are applied on the surface of the membrane, and then the membrane is formed in combination with the plastic substrate 10, which eliminates a secondary operation procedure and its manpower and man-hours, and simplifies the process of manufacturing the display apparatus.

Referring to FIG. 24, in some embodiments of the present disclosure, the display film 11 further comprises a light-transmitting background pattern 1122 (equivalent to the background pattern 21 in First embodiment), and the light-transmitting background pattern 1122 and the touch control pattern 1121 are disposed together at the back surface of the transparent substrate layer 111 through inkjet printing.

The light-transmitting background pattern 1122 is capable of showing the pattern under the irradiation of the light emitted by the backlight module 13, and may be a pattern for beautifying the appearance of the display apparatus or the icon for indicating the operation state of the display apparatus. Moreover, the light-transmitting background pattern 1122 may be printed at the back surface of the plastic substrate 10 through ultra-violet (UV) inkjet printing or thermal dye sublimation inkjet printing.

Referring to FIG. 23, in some embodiments of the present disclosure, the display apparatus further comprises an electric control board 14 (equivalent to the electric control board 82 in First embodiment) and an elastic electric conductor 15 (equivalent to the elastic electric conductor 83 in First embodiment). The electric control board 14 is electrically connected to the backlight module 13. The elastic electric conductor 15 has one end abutting against the electric control board 14 to realize the electrical connection with the electric control board 14, and another end abutting against the conductive silver paste layer 12 to realize the electrical connection with the conductive silver paste layer 12.

The electric control board 14 is electrically connected to the conductive silver paste layer 12, i.e., the electric control board 14 supplies power to the conductive silver paste layer 12. At this time, it may be considered that the conductive silver paste layer 12 and the air at infinity form the capacitance. After the operator touches the glass substrate 10 at the touch control pattern 1121, the human body and the conductive silver paste layer 12 form the capacitance and the capacitance discharges, i.e., the human body serves as the electric conductor and is grounded, to enable the human body and the conductive silver paste layer 12 which are equivalent to the capacitance to discharge. The electric control board 14 is configured to control the device using the display apparatus to perform the corresponding function after receiving the current transmitted by the conductive silver paste layer 12.

The elastic electric conductor 15 is configured to be electrically connected to the electric control board 14 and the conductive silver paste layer 12 to realize the transmission of the current from the conductive silver paste layer 12 to the electric control board 14.

In some embodiments of the present disclosure, the plastic substrate 10 has a light transmittance greater than or equal to 40% and smaller than or equal to 60%.

With the above embodiments, in a case where the light transmittance of the glass substrate 10 is within this range, when the display apparatus is in the scree-off state, the plastic substrate 10 is presented in the black and lighttight state, to shield and hide the touch control pattern 1121 printed at the plastic substrate 10, i.e., the operator may only observe the black plastic substrate 10 and may not see the electric control board 14, the backlight module 13, and the like at an inner side of the plastic substrate 10. In this way, when the display apparatus is in the scree-off state, the display apparatus has the good consistency in visual effect. In a specific embodiment of the present disclosure, the light transmittance of the plastic substrate 10 is 50%. The light transmittance represents an ability of light transmitting through the medium, and is the percentage of the luminous flux transmitting through the transparent body or the semitransparent body and its incident luminous flux. The light transmittance may indicate the efficiency of the light transmitting through the display apparatus and the like, which directly affects the visual effect of the touch screen. For example, when the parallel monochromatic light transmits through the uniform and non-scattering medium, a part of the light is absorbed, a part of the light transmits through the medium, and a part of the light is reflected by the surface of the medium.

Referring to FIG. 23, in some other embodiments of the present disclosure, the plastic substrate 10 has the electroplated layer 16 formed at the front surface of the plastic substrate 10. Alternatively, in yet another embodiment of the present disclosure, the plastic substrate 10 has the light transmittance greater than or equal to 40% and smaller than or equal to 60%, and the plastic substrate 10 further has the electroplated layer 16 formed at the front surface of the glass substrate 10. Each of the foregoing both embodiments may have the same effect as that in a case where the plastic substrate 10 has the light transmittance equal to or greater than 40% and smaller than or equal to 60%. In addition, since the electroplating may enhance the corrosion resistance, hardness, wear resistance of the electroplated body, and improve the conductivity, smoothness, heat resistance, and the like of the electroplated body, after the electroplated layer 16 is formed at the front surface of the plastic substrate 10, the smooth electroplated layer 16 facilitates the swiping of the operator's finger on the display apparatus, and the strong hardness, corrosion resistance, and wear resistance provide protection for the inkjet printing layer 112 and the light-shielding layer 113.

In some embodiments of the present disclosure, the thickness of the electroplated layer 16 is 1 µm. For the material of the electroplated layer 16, in some embodiments of the present disclosure, the electroplated layer 16 may be formed by the electroplating of the mixed material, such as the mixed electroplating of gold and silver and the mixed electroplating of zinc and silver. In other embodiments of the present disclosure, the electroplated layer 16 may be formed with a single material, like formed by the electroplating of copper or zinc. For the electroplating process of the electroplated layer 16, in some embodiments of the present disclosure, the electroplated layer 16 may be formed through the barrel plating process; in other embodiments of the present disclosure, the electroplated layer 16 may be formed through the rack plating process.

Referring to FIG. 23, in some embodiments of the present disclosure, the backlight module 13 comprises a lamp panel support 131 (equivalent to the lamp panel support 41 in First embodiment) and a lamp panel 132 (equivalent to the lamp panel 42 in First embodiment). The lamp panel 132 is disposed at the lamp panel support 131, and has a plurality of lamp sources 133 (equivalent to the lamp source 43 in First embodiment) provided thereon. The light emitted by the lamp sources 133 illuminates the touch control pattern 1121 after transmitting through the conductive silver paste layer 12 and the plastic substrate 10.

The lamp panel 132 is used for mounting the lamp source 133. In order to improve the utilization rate of the light emitted from the lamp panel 132, the lamp panel support 131 is provided with a light reflection layer at one side of the lamp panel support 131 close to the plastic substrate 10. In some embodiments of the present disclosure, the light reflection layer may be the light reflection film. In other embodiments of the present disclosure, the light reflection layer may be formed through inkjet printing with the light reflection material.

The lamp source 133 is configured to emit light. In some embodiments of the present disclosure, the lamp source 133 is the LED lamp, and emits white light. In this way, the white light is irradiated to the colored background pattern 1122 or the colored touch control pattern, which can directly show the original color of each of the background pattern 1122 and the touch control pattern, without the need to consider the case where the colored light and the colored background pattern 1122 or the colored touch control pattern are mixed to be in other colors when the light emitted by the lamp source 133 is colorful.

In some embodiments of the present disclosure, a surface of the lamp panel 132 facing towards the light-transmitting substrate 11 is provided with a white coating.

With the above technical solution, the white coating may reflect light of all colors. In this way, the light emitted from the lamp source 133 is reflected after being irradiated onto the lamp panel 132, which further improves the utilization rate of the light emitted from the lamp source 133.

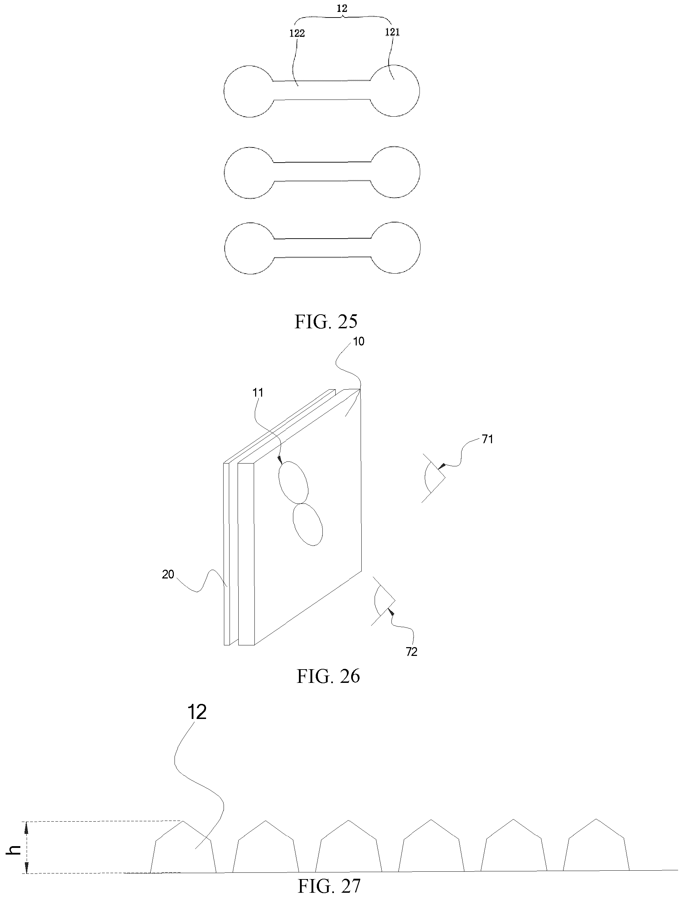

Referring to FIG. 25, in some embodiments of the present disclosure, the conductive silver paste layer 12 comprises a light-transmitting portion 121 (corresponding to the light-transmitting portion 141 in Second embodiment) and a power connection portion 122 (corresponding to the power connection portion 142 in Second embodiment), and the light-transmitting portion 121 covers the touch control pattern 1121. The power connection portion 122 abuts against and is electrically connected to the elastic electric conductor 15.

The light-transmitting portion 121 is corresponding to the touch control pattern 1121. When the operator touches the plastic substrate 10 corresponding to the light-transmitting portion 121, the electrical path is formed between the operator, the light-transmitting portion 121, the power connection portion 122, the elastic electric conductor 15, and the electric control board 14 to trigger the key module on the electric control board 14 to generate a key signal, and the key signal is transmitted to the control system of the household appliance that uses the display apparatus, to control the household appliance to perform the corresponding function.

In some embodiments of the present disclosure, the light-transmitting portion 121 partially covers the corresponding touch control pattern 1121. At this time, the area of the light-transmitting portion 121 is greater than the area of the touch control pattern 1121. Even if the operator fails to accurately touch the corresponding touch control pattern 1121, the display apparatus can still discharge the current, to cause the electric control board 14 to control the device using the display apparatus to perform the corresponding function. In other embodiments of the present disclosure, the light-transmitting portion 121 covers the corresponding touch control pattern 1121. In this way, the amount of conductive silver paste can be reduced and the cost of the display apparatus can be lowered, and an area of the plastic substrate 10 covered by the light-transmitting portion 121 can be reduced, improving the brightness of the display apparatus. The power connection portion 122 is configured to be connected to the light-transmitting portion 121 and the elastic electric conductor 15.

In some embodiments of the present disclosure, the electric control board 14 has a plurality of pins. Each elastic electric conductor 15 is electrically connected to one pin. The plurality of elastic electric conductors 15 are connected to the plurality of pins in one-to-one correspondence. Alternatively, each elastic electric conductor 15 is electrically connected to a plurality of pins, realizing the one-to-many connection of the elastic electric conductor 15 and the pins. In this way, when the operator touches the plastic substrate 10 at each touch control pattern 111, the conductive silver paste layer 12 corresponding to touch control pattern 111, the elastic electric conductor 15, and the pins may transmit the electrical signals in an orderly and independent manner.

The plurality of elastic electric conductors 15 are connected to the plurality of different pins of the electric control board 14. In this way, when the plurality of operators touch the glass substrates 10 at different touch control patterns 111, the electric control board 14 controls the device using the display apparatus to perform different kinds of functions. In other embodiments of the present disclosure, one elastic electric conductor 15 is connected to the plurality of pins of the electric control board 14. In this way, when the operator touches the plastic substrate at the touch control pattern 111 corresponding to the elastic electric conductor 15, the electric control board 14 may control the device using the display apparatus to perform the plurality of functions simultaneously. For example, when the display apparatus is applied in the water boiler, the operator may realize the functions of water loading and heating simultaneously by touching the one touch control pattern.

### Sixth embodiment

This embodiment provides a display apparatus. As shown in FIG. 26, the display apparatus (equivalent to the full-screen display apparatus in First embodiment) comprises a display film 10 (the display film 10 comprises the inkjet printing layer 20 and the light-shielding layer 30 in First embodiment). The display film 10 has a grating three-dimensional pattern 11 (equivalent to the grating three-dimensional pattern in First embodiment). The grating three-dimensional pattern 11, when viewed from different viewing angles, is capable of displaying different patterns. The grating three-dimensional pattern 11 is that the pattern with a three-dimensional effect is displayed on the plane by using the grating material.

It should be noted that, as an example, an optical grating consists of a plurality of lenses. Based on the stereoscopic imaging principle, the grating stereoscopic imaging principle is that: when viewed from one side of the optical grating, an image on a very thin line at another surface of the optical grating is seen, and a position of this line is determined by a viewing angle. If several images on different lines, corresponding to a width of each lens, are printed on a back surface of the optical grating in rows sequentially, when the images on the back surface of the optical grating are viewed by the user through the lens from different viewing angles at a front surface of the optical grating, the user will see different images. This principle is also called the stereoscopic imaging principle.

It can be understood that, in the present disclosure, by providing the display film 10 with the grating three-dimensional pattern 11 in the display apparatus, the user may clearly see a pattern image with a strong three-dimensional effect in the grating three-dimensional pattern 11, and the display apparatus is capable of displaying rich and colorful three-dimensional patterns. When the display apparatus is applied in the household appliance, an ultra-realistic large color screen effect may be simulated in the household appliance, which can enhance an aesthetic sense of the household appliance.

It should also be noted that in the present disclosure, the grating three-dimensional pattern 11, when viewed from different viewing angles, may display different patterns, and the different patterns may be completely different patterns. For example, the grating three-dimensional pattern 11, when viewed from a first viewing angle 71, displays a water cup pattern. The grating three-dimensional pattern 11, when viewed from a second viewing angle 72, displays a text pattern. The grating three-dimensional pattern 11, when viewed from different viewing angles, may display different patterns, enabling the display apparatus to display richer and more colorful patterns.

In some embodiments of the present disclosure, continuing to refer to FIG. 26, the display apparatus further comprises a backlight module 20 (equivalent to the backlight module 40 in First embodiment). The backlight module 20 is disposed at a light incident side of the display film 10. The light emitted by the backlight module 20 is capable of illuminating the grating three-dimensional pattern 11. The light emitted by the backlight module 20 emits from the light incident side of the display film 10 into the display film 10. The backlight module 20 may provide the grating three-dimensional pattern 11 with light to illuminate the grating three-dimensional pattern 11. In this way, the user can more clearly see the pattern image with a strong three-dimensional effect in the grating three-dimensional pattern 11. In some embodiments of the present disclosure, the grating three-dimensional pattern 11 is capable of displaying a pattern comprising at least one of a skeuomorphism pattern, a text pattern, or a number pattern. The skeuomorphism pattern may be a water cup pattern, a sun pattern, a moon pattern, a lake surface pattern, and other patterns. The skeuomorphism pattern may be used as the background pattern of the display apparatus to greatly enhance the aesthetic sense of the display picture of the display apparatus. The text pattern may be a pattern such as a Kai Ti text pattern and a wordart text pattern. The text pattern may be used as the touch control pattern of the display apparatus, such as a mode control pattern and a water temperature control pattern. The number pattern may be a pattern of any numerical value, like 1, 2, and 3. The number pattern may be used as a state indication pattern of the display apparatus, such as an indication indicating that the water temperature is 44 degrees.

In an embodiment of the present disclosure, the grating three-dimensional pattern 11 has a grating viewing angle greater than or equal to 30 degrees and smaller than or equal to 60 degrees, to enable the grating three-dimensional pattern 11 to display different patterns when viewed from different viewing angles. The grating viewing angle of the grating three-dimensional pattern 11 may be 30 degrees, 35 degrees, 40 degrees, 45 degrees, 50 degrees, 60 degrees, or other degrees.

In some embodiments of the present disclosure, as shown in FIG. 27, the display film 10 may comprise a grating plate 12. The grating three-dimensional pattern 11 is disposed at the grating plate 12. The grating plate 12 has a thickness of h, and h is greater than or equal to 0.25 mm and smaller than or equal to 0.9 mm. By adding the grating plate 12 and accurately selecting the thickness of the grating plate 12, the display apparatus is enabled to display a clear pattern with a strong three-dimensional effect. The thickness h of the grating plate 12 may be 0.25 mm, 0.4 mm, 0.5 mm, 0.75 mm, or 0.9 mm.

The grating plate 12 may be an elongated grating plate, a column-shaped grating plate, an annular grating plate, an arc-shaped grating plate, or a trapezoidal grating plate. A grating distance of the grating plate 12 and a number of grating lines may be selected according to actual needs. Generally speaking, on the basis of an unchanged dimension of the grating plate 12, the fewer the number of grating lines, and the larger the grating distance, the further an optimal observation distance.

It should also be noted that the grating three-dimensional pattern 11 may be formed at a side surface of the grating plate 12 close to a display module through inkjet printing, and the pattern formed through inkjet printing has the advantages of vivid colors and high saturation, which is helpful to the clear display of the grating three-dimensional pattern 11.

The grating three-dimensional pattern 11 may be formed at the side surface of the grating plate 12 close to the display module through inkjet printing many times. As an example, the grating three-dimensional pattern 11 is formed through inkjet printing twice. After the desired pattern is formed at the side surface of the grating plate 12 close to the display module for the first time, the same pattern is formed at the side surface of the grating plate 12 close to the display module for the second time, and the same pattern is superimposed for multiple times to form a final grating three-dimensional pattern 11, enabling lines and colors of the grating three-dimensional pattern 11 to be clearer.

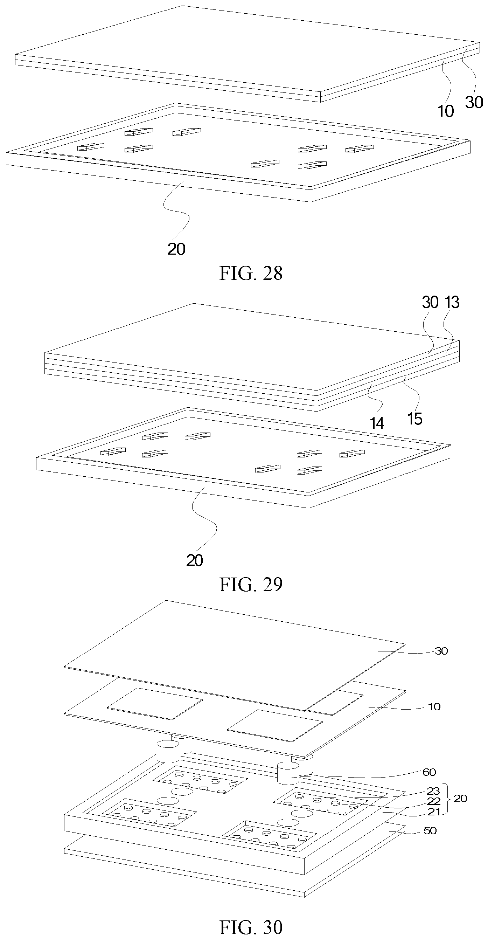

In an embodiment of the present disclosure, as shown in FIG. 28, the display apparatus may further comprise a light-transmitting substrate 30 (equivalent to the light-transmitting substrate 10 in First embodiment), and the display film 10 is disposed at the front surface or the back surface of the light-transmitting substrate 30.

The light-transmitting substrate 30 provides protection for the display film 10, the backlight module 20, and the like, and the light-transmitting substrate 30 may be a light-transmitting glass plate or a light-transmitting plastic plate.

In some embodiments of the present disclosure, as shown in FIG. 29, the display film 10 comprises a transparent substrate layer 13 (equivalent to the transparent substrate layer 12 in First embodiment), a pattern layer 14 (equivalent to the inkjet printing layer 20 in First embodiment), and a light-shielding layer 15 (equivalent to the light-shielding layer 30 in First embodiment).

The transparent substrate layer 13 may be a polyester resin (PET) layer, and the transparent substrate layer 13 may be used as a carrier for the pattern layer 14. The pattern layer 14 has a grating three-dimensional pattern 11. The light-shielding layer 15 is disposed at the transparent substrate layer 13 or the pattern layer 14, and has the light-transmitting region at a position corresponding to grating three-dimensional pattern 11. The light-shielding layer 15 may be disposed at a side of the transparent substrate layer 13 away from the inkjet printing layer, or may be disposed at a side of the pattern layer 14 away from the transparent substrate layer 13. The light-shielding layer 15 is used to shield the region on the pattern layer 14 that does not need to be light-transmissive (e.g., an outer peripheral edge region of the grating three-dimensional pattern 11), and the light-transmitting region may be light-transmissive, to enable the grating three-dimensional pattern 11 to be displayed normally under the illumination of light. When the grating three-dimensional pattern 11 is normally illuminated, light at the outer peripheral edge region of the grating three-dimensional pattern 11 is shielded by the light-shielding layer 15. In this way, a region where the grating three-dimensional pattern 11 is located and the outer peripheral edge region of the grating three-dimensional pattern 11 form a sharp contrast between light and dark, making a display of the grating three-dimensional pattern 11 clearer. A preparation material of the light-shielding layer 15 may be black ink, black resin, or light-shielding tape, or the like. The light-shielding layer 15 may be formed at the transparent substrate layer 13 or the pattern layer 14 through a process such as silk screen printing, inkjet printing, or pasting.

In some embodiments of the present disclosure, as shown in FIG. 30, the backlight module 20 is a direct backlight module or an edge backlight module.

When the backlight module 20 is the direct backlight module, the backlight module 20 comprises a lamp panel support 21 (equivalent to the lamp panel support 41 in First embodiment), a lamp panel 22 (equivalent to the lamp panel 42 in First embodiment), and a plurality of lamp sources 23 (equivalent to the lamp source 43 in First embodiment). The lamp panel 22 is disposed at the lamp panel support 21 and disposed facing towards the display film 10. The plurality of lamp sources 23 are disposed at the lamp panel 22 and disposed facing towards the display film 10. Moreover, the lamp source 23 and the display film 10 are spaced apart from each other.

A spacing between the lamp source 23 and the display film 10 is greater than or equal to 5 millimeters, to allow for a sufficient light mixing space between the lamp source 23 and the grating three-dimensional pattern 11, which can prevent the lamp source 23 from being seen by the user when viewing the display apparatus.

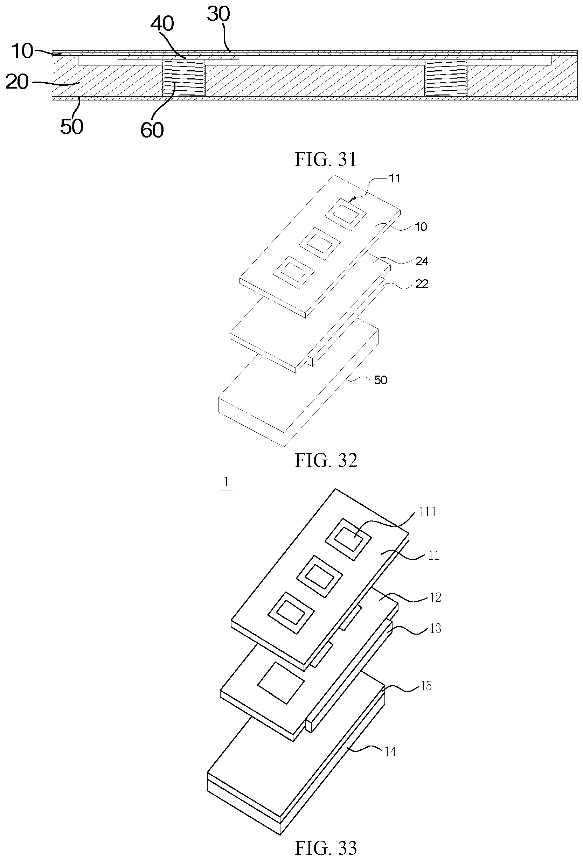

Referring to FIG. 30 and FIG. 31, in some embodiments of the present disclosure, the display apparatus further comprises a light-transmitting conductive member 40 (equivalent to the light-transmitting conductive member 81 in First embodiment), an electric control board 50 (equivalent to the electric control board 82 in First embodiment), and an elastic electric conductor 60 (equivalent to the elastic electric conductor 83 in First embodiment).

The light-transmitting conductive member 40 is disposed at a side of the light-transmitting substrate 30 facing towards the backlight module 20. A projection of the light-transmitting conductive member 40 on the light-transmitting substrate 30 covers the grating three-dimensional pattern 11. The electric control board 50 is connected to the backlight module 20. The elastic electric conductor 60 has two ends respectively abutting against the electric control board 50 and the light-transmitting conductive member 40, to be electrically connected to the electric control board 50 and the light-transmitting conductive member 40.

Compared with a conventional solution of electrically connecting the light-transmitting conductive member 40 to the main control board through the wires, the elastic electric conductor 60 may ensure that an electrical connection relationship between the light-transmitting conductive member 40 and the main control board is stable, to ensure the normal operation of the display apparatus for a long period of time, which can prevent the circuit of the display apparatus from aging or having poor contact after long-term use.

The elastic electric conductor 60 may comprise at least one of a spring, a metal elastic sheet, conductive rubber, or conductive foam. The light-transmitting conductive member 40 may comprise at least one of a conductive silver paste layer, an indium tin oxide layer, or a conductive resin layer. In this way, the light-transmitting conductive member 40 has a high degree of light transmittance.

In an embodiment of the present disclosure, the lamp panel 22 may have a light reflection layer formed at a surface of the lamp panel 22 facing towards the light-transmitting substrate 30. The light reflection layer may reflect the light emitted from the lamp source 23. In this way, most of the light emitted from the lamp source 23 is irradiated to the light-transmitting substrate 30, to improve the utilization rate of the light.

The light reflection layer may be a coating with a high light reflectivity, like a white coating or a white-like coating. The light reflection layer may be a reflective lacquer coating. The reflective principle of the reflective lacquer coating is that reflective lacquer contains a large number of light reflection microbeads, which may reflect the incident light through the light reflection microbeads back, to form a good light reflection effect.

As shown in FIG. 32, when the backlight module 20 is the edge backlight module, the backlight module 20 comprises a light guide plate 24 and a lamp panel 22. The light guide plate 24 is located at the back surface of the display film 10 and is parallel to the display film 10. The lamp panel 22 is located at a side of the light guide plate 24. The plurality of lamp sources 23 are mounted at the lamp panel 22 and face towards a side surface of the light guide plate 24.

The light guide plate 24 may be attached to the back surface of the display film 10 to reduce the overall thickness of the display apparatus. The light guide plate 24 may be made of an acrylic (polymethyl methacrylate) material. In this way, the light guide plate 24 has good light transmittance and low hardness. Therefore, it is uneasy to scratch the display film 10 on the light guide plate 24, and especially during long-term use of the display film 10, wear and tear of the display film 10 is not caused.

### Seventh embodiment

This embodiment provides a display apparatus 1 (equivalent to the full-screen display apparatus in First embodiment), comprising a display film 11 (the display film 11 comprises the inkjet printing layer 20 and the light-shielding layer 30 in First embodiment), a light guide plate 12, a backlight source 13 (equivalent to the lamp source 43 in First embodiment), an electric control board 14 (equivalent to the electric control board 82 in First embodiment), and a light reflection coating 15.

The display film 11 may form a part of a housing of a household appliance to which the display apparatus 1 belongs. The display film 11 has a light-transmitting touch control pattern 111 (equivalent to the touch control pattern 22 in First embodiment). As an example, the light is projected onto the display film 11. The light may transmit through the touch control pattern 111 on the display film 11, enabling the user to see contents of the touch control pattern 111. In an exemplary embodiment of the present disclosure, the outer peripheral edge region of the touch control pattern 111 may be a lighttight portion. When the touch control pattern 111 is normally illuminated, the light doesn't transmit through the outer peripheral edge region of the touch control pattern 111. In this way, a sharp contrast of light and darkness is formed between the region where the touch control pattern 111 is located and the outer peripheral edge region of the touch control pattern 111, to make the display of the touch control pattern 111 clearer.

A plurality of the touch control patterns 111 may be provided. The contents of the touch control pattern 111 comprise, but are not limited to, a time display, a temperature display, a water quantity display, a mode selection, or the like. A corresponding operation may be performed on the display apparatus by tapping the touch control pattern 111. In other embodiments of the present disclosure, when the display apparatus 1 operates normally, in addition to displaying the monotonous pattern such as the touch control pattern 111, some background patterns (equivalent to the background pattern 21 in First embodiment) may also be displayed, which can make full use of a display area of the display film 11, making the picture displayed by the display apparatus 1 richer and more colorful. The background pattern comprises, but is not limited to an earth pattern, a moon pattern, a lake surface pattern, and the like, which may enrich a display content of the display apparatus 1.

The light guide plate 12 is disposed at a light incident side of the display film 11. A backlight source 13 and the light guide plate 12 are disposed adjacent to each other. Light emitted from the backlight source 13 may transmit through the light guide plate 12 to illuminate the touch control pattern 111. The light guide plate 12 is configured to guide a light source to be uniformly dispersed to the display film 11, which makes utilization of the light source more sufficient, enabling the light emitted by the backlight source 13 to be projected more from the light incident side onto the display film 11. The light guide plate 12 may be connected to the display film 11 through bonding or other manners. In other embodiments of the present disclosure, there may be no direct connection relationship between the light guide plate 12 and the display film 11.

The electric control board 14 is electrically connected to the backlight source 13, and is located at a side of the light guide plate 12 facing away from the display film 11. The electric control board 14 is configured to supply power to the backlight source 13 and control an emitting state of the backlight source 13. The electric control board 14 may be provided with a key module. When the user touches a part corresponding to the touch control pattern 111 of the display film 11, an electrical circuit is formed between the user and the electric control board 14, and the key module is triggered to generate the key-press signal. The electric control board 14 may be connected to the light guide plate 12 through bonding, abutting, and other manners. The electric control board 14 may also be connected to the light guide plate 12 through a support member, i.e., there is no direct connection relationship between the electric control board 14 and the light guide plate 12.

The light reflection coating 15 is disposed at a side of the electric control board 14 facing towards the light guide plate 12, to form a specular reflection of light. When the light emitted from the backlight source 13 is projected onto the light reflection coating 15 on the electric control board 14, the light reflection coating 15 may reflect the light, making most of the light transmit through the display film 11. The light reflection coating 15 is conducive to the light source being reflected to the display film 11 to a greater extent, so as to reduce light leakage at the electric control board 14 and to improve a utilization rate of the light source by the display apparatus 1, which enables the touch control pattern 111 to be displayed more clearly. Moreover, the light reflection coating 15 is attached to the electric control board 14, and is connected to the electric control board 14 through adhesive bonding.

In some embodiments of the present disclosure, the light reflection coating 15 is an argenteous coating.

It can be understood that the argenteous coating has a better light reflection effect than light reflection effects of other colors. When the light from the backlight source 13 is irradiated on the argenteous coating on the electric control board 14, the argenteous coating will reflect most of the light, ultimately causing most of the light to transmit through the display film 11 and reducing the light leakage at the electric control board 14.

Further, in some embodiments of the present disclosure, the argenteous coating has a thickness greater than or equal to 0.1 µm and smaller than or equal to 0.3 µm. When the thickness of the argenteous coating is within this range, a good light reflection effect may be achieved. When the thickness of the argenteous coating is smaller than 0.1 µm, the light reflection effect does not satisfy the required requirements. When the thickness of the argenteous coating is greater than 0.3 µm, it is not easy to ensure uniformity of the coating, and the coating is prone to wrinkle and fall off.

In addition, in some embodiments of the present disclosure, the argenteous coating is an aluminum coating or a silver coating. The aluminum coating and the silver coating may each form a better and smoother mirror surface with a more obvious light reflection effect. The use of such a coating material may provide a better light reflection effect.

In other embodiments of the present disclosure, the light reflection coating 15 may also be of other materials. In some embodiments of the present disclosure, the light reflection coating is a reflective lacquer coating.

It should be noted that the reflective principle of the reflective lacquer coating is that the reflective lacquer contains a large number of light reflection microbeads, which may reflect the incident light through the light reflection microbeads back, to form a good light reflection effect. When the light emitted from the backlight source 13 is irradiated to the reflective lacquer coating on the electric control board 14, the reflective lacquer coating reflects most of the light out, ultimately causing most of the light to transmit through the display film 11 and reducing the light leakage at the electric control board 14.

Further, in some embodiments of the present disclosure, the reflective lacquer coating has a thickness greater than or equal to 0.1 µm and smaller than or equal to 0.5 µm. In the present disclosure, in order to reflect the light emitted by the backlight source 13, the thickness of the reflective lacquer coating is within the range of greater than or equal to 0.1 µm and smaller than or equal to 0.5 µm to achieve a good reflection effect. When the thickness of the reflective lacquer coating is smaller than 0.1 µm, the light reflection effect does not satisfy the required requirements. When the thickness of the reflective lacquer coating is greater than 0.5 µm, it is not easy to ensure the uniformity of the coating, and the production cost is increased.

In some embodiments of the present disclosure, the light guide plate 12 has a light reflection coating 15 formed at a peripheral side of the light guide plate 12.

It should be noted that after the light is emitted, light projected onto the electric control board 14 may be reflected by the light reflection coating 15 on the electric control board 14, and light projected onto the peripheral side of the light guide plate 12 may also be reflected by the light reflection coating 15 on the light guide plate 12. In this way, the light emitted from the backlight source 13 can be projected onto the display film 11 to a greater extent, enabling the touch control pattern 111 on the display film 11 to be displayed more clearly.

It also needs to be noted that the light reflection coating 15 at the peripheral side of the light guide plate 12 and the light reflection coating 15 at the side of the electric control board 14 facing towards the light guide plate 12 may each be the argenteous coating or each be the reflective lacquer coating. In other embodiments of the present disclosure, both the light reflection coating 15 at the peripheral side of the light guide plate 12 and the light reflection coating 15 at the side of the electric control board 14 facing towards the light guide plate 12 may be made of different materials. For example, the light reflection coating 15 at the peripheral side of the light guide plate 12 is the argenteous coating, and the light reflection coating 15 at the side of the electric control board 14 facing towards the light guide plate 12 is the reflective lacquer coating. The light reflection coating 15 is not limited specifically to the examples.

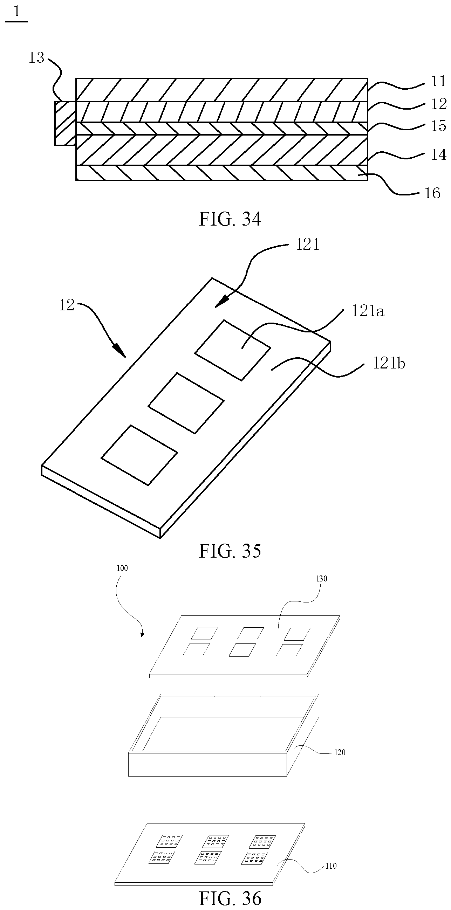

In some embodiments of the present disclosure, with reference to FIG. 34, a light-shielding layer 16 (a different membrane layer from the light-shielding layer 30 in First embodiment) is formed at the side of the electric control board 14 facing away from the light guide plate 12.

It should be noted that the light reflection coating 15 is formed at the side of the electric control board 14 facing towards the light guide plate 12 and has an effect of reflecting the light source. The light-shielding layer 16 is formed at the side of the electric control board 14 facing away from the light guide plate 12 and has an effect of shielding the transmitting of the light, which can make the light projected onto the electric control board 14 be reflected to the display film 11 in a larger amount, and greatly improves the utilization rate of the light source by the display apparatus 1. Because a dark-colored material has a better shielding effect on the light, the light-shielding layer 16 may be prepared with materials such as black ink, black resin, or light shielding tape; and the light-shielding layer 16 may be formed at the electric control board 14 through a process such as silk-screen printing, inkjet printing, or pasting.

In some embodiments of the present disclosure, referring to FIG. 33 and FIG. 35, the light guide plate 12 has a light-emitting surface 121 close to the display film 11. The light-emitting surface 121 has a light-transmitting portion 121a and a light reflection portion 121b provided thereon. A projection of the light-transmitting portion 121a on the display film 11 covers the touch control pattern 111. The light reflection portion 121b is configured to reflect part of the light projected onto the light-emitting surface 121 and cause most of the light to transmit through the light-transmitting portion 121a.

It should be noted that the light transmitting through the light-transmitting portion 121a may illuminate the touch control pattern 111 on the display film 11, enabling the user to see the touch control pattern 111 clearly. A chamber is formed between the light reflection portion 121b and the light reflection coating 15 of the electric control board 14. Part of the light emitted from the backlight source 13 transmits through the light guide plate 12 and is projected onto the display film 11, and part of the light transmits through the light guide plate 12 and is projected onto the display film 11 after a series of refractions and reflections in this chamber. Finally, most of the light may transmit through the display film 11, which greatly improves the utilization rate of the light source by the display apparatus 1, and enables the touch control pattern 111 to be displayed more clearly.

In some embodiments of the present disclosure, the backlight source 13 is disposed at the side of the light guide plate 12 facing away from the display film 11.

It should be noted that the backlight source 13 may emit light from a spontaneous light source (like a lamp and a light emitting diode). A part of the light is reflected by the light reflection coating 15, upwardly dispersed uniformly through the light guide plate 12, and then emitted from the display film 11. Since the backlight source 13 is disposed between the light guide plate 12 and the electric control board 14, a space where the backlight source 13 may be placed is large. Therefore, for the backlight source 13, one or more light sources such as lamps may be mounted according to a size of the light guide plate 12. When the backlight source 13 is disposed at the side of the light guide plate 12 facing away from the display film 11, the display apparatus 1 may have a good high luminance and a good light-emitting viewing angle, and has a simple structure.

In other embodiments of the present disclosure, the backlight source 13 may be disposed at other positions of the light guide plate 12. Referring to FIG. 33, the backlight source 13 is disposed at one side of the light guide plate 12, which can lower the thickness of the entire display apparatus 1, and has the characteristics of light weight, thinness, narrow frame, and low power consumption.

### Eighth embodiment

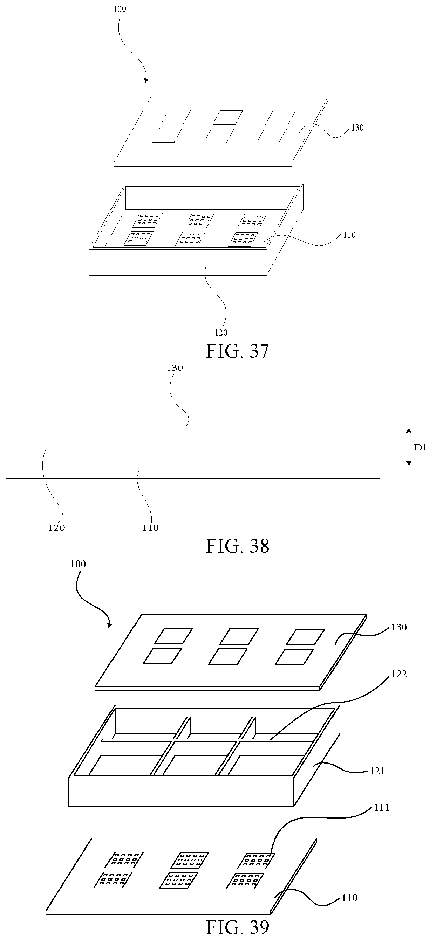

As shown in FIG. 36 and FIG. 37, this embodiment provides a display apparatus 100 (equivalent to the full-screen display apparatus in First embodiment). The display apparatus 100 comprises a lamp panel 110 (equivalent to the lamp panel 42 in First embodiment), a support 120 (equivalent to the lamp panel support 41 in First embodiment), and a display film 130 (the display film 130 comprises the inkjet printing layer 20 and the light-shielding layer 30 in First embodiment).

The lamp panel 110 may consist of a substrate and a lamp bead (equivalent to the lamp source 43 in First embodiment). The substrate may be a rigid plate, or a flexible plate to be easily adapted to the arc-shaped display film 130. The lamp bead is the lamp source 43, and may be an LED lamp bead, which is characterized by a high brightness and power saving.

The support 120 is disposed between the lamp panel 110 and the display film 130, and is used for connecting the lamp panel 110 to the display film 130. The support 120 may space the lamp panel 110 apart from the display film 130 to enable light emitted from the LED lamp beads at the lamp panel 110 to be diffused, enabling the light emitted from the LED lamp beads to be irradiated on the display film 130 uniformly. In addition, the support 120 may also improve an overall strength of the display apparatus 100. In an exemplary embodiment of the present disclosure, a material of the support 120 may be plastic, which is easy to process and lightweight.

The display film 130 is provided with one or more light-transmitting patterns (equivalent to patterns such as the touch control pattern 22 in First embodiment). The light-transmitting patterns may be arranged at intervals or overlap each other. The light emitted from the lamp panel 110 is irradiated onto the display film 130, enabling the light-transmitting pattern on the display film 130 to be clearly presented. In order to conveniently receive the light emitted from the lamp panel 110, the display film 130 is opposite to the lamp panel 110. For example, the display film 130 is preferably disposed at the support 120. In other embodiments of the present disclosure, the display film 130 may be disposed at other components.

In summary, in the embodiments of the present disclosure, the lamp panel 110 has a predetermined distance from the display film 130. In this way, the light emitted from the LED lamp beads at the lamp panel 110 can be diffused from a top of the lamp beads, making the light irradiated to the display film 130 more uniform.

As shown in FIG. 38, in some embodiments, a spacing D1 between an outer surface of the lamp panel 110 and an inner surface of the display film 130 is greater than or equal to 9 mm and smaller than or equal to 11 mm. Under this spacing, the light emitted from the lamp panel 110 may be irradiated uniformly on the display film 130, and a decrease in the brightness of the light is small. At the same time, the thickness of the display apparatus 100 may also be made to be within a reasonable range. Preferably, the spacing D1 between the outer surface of the lamp panel 110 and the inner surface of the display film 130 is 10 mm.

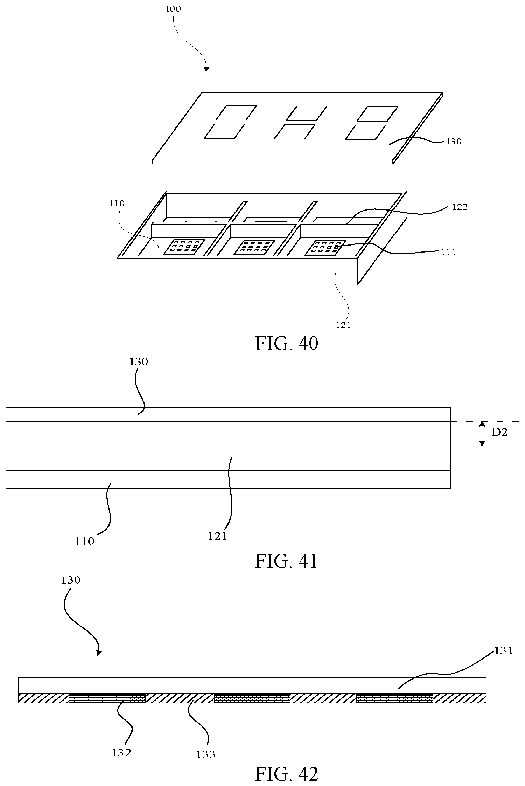

As shown in FIG. 39 and FIG. 40, in some embodiments, the support 120 comprises an outer frame 121 and a grating 122.

The outer frame 121 is connected to the display film 130 to support the display film 130. A side of the outer frame 121 facing away from the display film 130 is connected to the lamp panel 110. A shape of the outer frame 121 may match a shape of the lamp panel 110 or a shape of the display film 130. For example, the outer frame 121 is of a same size as the lamp panel 110 or the display film 130. In other embodiments of the present disclosure, the outer frame 121 may be greater than the lamp panel 110, and the lamp panel 110 as a whole is embedded in the outer frame 121. The lamp panel 110 comprises a plurality of sub-panels 111. The plurality of sub-panels 111 are corresponding to the plurality of light-transmitting regions in one-to-one correspondence. Each of the sub-panels 111 may be provided with a plurality of LED lamp beads. The colors of the plurality of LED lamp beads may be the same or different.

The grating 122 is connected to the outer frame 121 and is disposed between the display film 130 and the lamp panel 110. The outer frame 121 and the grating 122 may be integrally formed. The integrally formed outer frame 121 and grating 122 have good structural integrity. The grating 122 has a plurality of light-transmitting regions. For example, the grating 122 may be in a grid shape, and each grid is a light-transmitting region. The light emitted from the lamp panel 110 provides backlighting to the display film 130 through the light-transmitting regions, i.e., each light-transmitting region corresponds to one light-transmitting pattern or a part of the light-transmitting pattern. The grating 122 has a predetermined light shielding effect and a light gathering effect, allowing most of the light emitted from the sub-panel 111 in each light-transmitting region to be irradiated to one corresponding light-transmitting pattern or one corresponding part of the light-transmitting pattern. When the light emitted from the sub-panel 111 in one light-transmitting region changes, a part of the light-transmitting pattern corresponding to the current light-transmitting region has a more obvious visual change. The light-transmitting pattern may be an identification such as a graph or text. For example, by taking a washing machine as an example, the light-transmitting pattern may be a pattern used to characterize washing and dehydration and a text used to characterize an amount of water. By taking a rice cooker as an example, the light-transmitting pattern may be a pattern used to characterize a rice cooking mode.

By controlling light change of one or more sub-panels 111, different change effects of the light-transmitting pattern may be realized. For example, by controlling illuminating or extinguishing of the sub-panel 111 in one light-transmitting region, it indicates that a function represented by the light-transmitting pattern in the light-transmitting region is in an opening state or a closing state. For another example, by controlling a brightness change of a plurality of sub-panels 111 in a plurality of light-transmitting regions, brightness at different positions of one light-transmitting pattern is caused to change, realizing different prompting effects.

In order to achieve the above effect, the display apparatus 100 may further comprise an electric control board, which is configured to control the LED lamp beads on the sub-panel 111 to change a brightness, color, operation state, and the like of the LED lamp beads on the sub-panel 111. The electric control board and the lamp panel 110 may share a same substrate, to make the structure of the display apparatus 100 more compact, or the electric control board and the lamp panel 110 may be disposed separately to realize centralized control of a plurality of display apparatuses 100.

It should be noted that in the related art, the grating 122 abuts against the display film 130, allowing the light emitted from the sub-panel 111 to be basically restricted to irradiate into the light-transmitting region corresponding to the sub-panel 111. Due to the shielding of the grating 122, a surface of the display film 130 abutting against the grating 122 is difficult to be irradiated by the light emitted from the sub-panel 111, which results in the formation of a shielding portion between two adjacent light-transmitting regions. Compared with the light-transmitting region, the shielding portion has a lower brightness, which makes it easy to form an obvious visual contrast, and thus results in the light-transmitting pattern, when illuminated, having a more serious sense of visual segmentation, affecting the identification.

In the display apparatus 100 of the embodiments of the present disclosure, a side of the grating 122 away from the lamp panel 110 is spaced apart from the display film 130, i.e., the grating 122 does not abut against the display film 130, and the light emitted from the sub-panel 111 may partially transmit through a gap between the grating 122 and the display film 130 to be irradiated a region between the light-transmitting region corresponding to the sub-panel 111 and an adjacent light-transmitting region, or to be irradiated to the adjacent light-transmitting regions, avoiding generation of the shielding portion. In this way, the light-transmitting pattern, when illuminated, has a better integrated sense and is easy to identify.

As shown in FIG. 41, in some embodiments, a spacing D2 between the side of the grating 122 away from the lamp panel 110 and the display film 130 is greater than or equal to 4 mm and smaller than or equal to 5 mm. A large part of the light emitted from the sub-panel 111 is irradiated to the light-transmitting region corresponding to the sub-panel 111, and a small part of the light is irradiated to a region between the corresponding light-transmitting region and the adjacent light-transmitting region. In this way, the light emitted from the sub-panel 111 to the display film 130 can both have an obvious brightness change effect and ensure a better integrated sense of the light-transmitting pattern.

In some embodiments, a light reflection layer is disposed at a surface of the lamp panel 110 facing towards the display film 130.

A reflectivity of the light reflection layer is greater than a reflectivity of the lamp panel 110. In other words, a light reflection effect of the light reflection layer is stronger than a light reflection effect of the lamp panel 110. In this way, the lamp panel 110 having the light reflection layer can make the light emitted from the LED lamp beads be reflected as much as possible to the light-transmitting pattern, allowing the light-transmitting pattern to be clearer and brighter. The light reflection layer may be an electroplated layer, and the electroplated light reflection layer has a good light reflection effect and is aesthetically pleasing. Alternatively, the light reflection layer may be a paste layer, and the paste light reflection layer is simple and easy to realize, which is conducive to a reduction in the production cost of the display apparatus 100. Alternatively, the light reflection layer may be a coating layer, and a surface of the coating light reflection layer is smooth and easy to reflect.

In some embodiments, a surface of the support 120 is white or argenteous.

The support 120 may be made of a material with a reflectivity greater than 15%, which can make an overall light reflection effect of the support 120 good, and further can make the light emitted from the LED lamp beads at the lamp panel 110 be reflected to the light-transmitting pattern, allowing the light-transmitting pattern to have a better display effect. The support 120 may be made of a light-colored material such as a white material, an argenteous material, and a silver material, which can improve the light reflection effect of the support 120.

It can be understood that the display apparatus 100 of the embodiments of the present disclosure may have the surface of the support 120 to be white or argenteous while the light reflection layer is disposed at the surface of the lamp panel 110 facing towards the display film 130, to have both the light reflection effect of the light reflection layer and the light reflection effect of the surface, which further improves an irradiation brightness of the lamp panel 110.

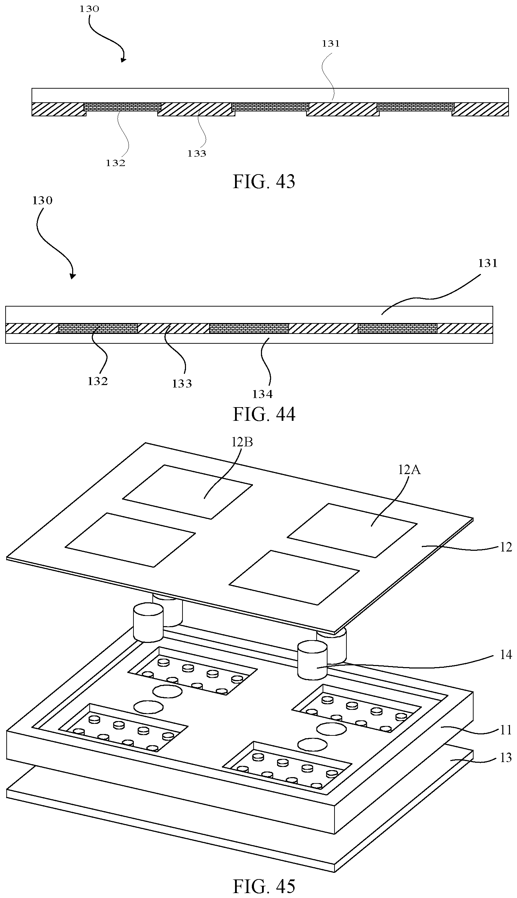

As shown in FIG. 42 and FIG. 43, in some embodiments, the display film 130 comprises a transparent substrate layer 131 (equivalent to the transparent substrate layer 12 in First embodiment), an inkjet printing layer 132 (equivalent to the inkjet printing layer 20 in First embodiment), and a light-shielding layer 133 (equivalent to the light-shielding layer 30 in First embodiment).

The transparent substrate layer 131 may be made of a light-transmitting material. Meanwhile, the transparent substrate layer 131 may also be used to carry the inkjet printing layer 132 and the light-shielding layer 133. For example, the transparent substrate layer 131 may be made of glass. The transparent substrate layer 131 may be a glass plate. The glass plate has a good light transmittance. In this way, a power of the lamp panel 110 can be set low, which is helpful to a reduction in a power of the entire display apparatus 100 and prolongs a service life of the lamp panel 110. The transparent substrate layer 131 may be a PET layer, a PVC layer specifically.

The transparent substrate layer 131 may be made of a non-transparent material. For example, the transparent substrate layer 131 may be made of metal. The transparent substrate layer 131 may be a metal plate, and the metal plate has light transmission holes formed in an array. A region where the light transmission holes are formed is directly opposite to the light-transmitting pattern, i.e., the transparent substrate layer 131 has light transmission holes formed in the region directly opposite to the light-transmitting pattern. The plurality of light transmission holes may be arranged in a rectangular array. For example, the metal plate has a plurality of light transmission holes in a 10*10 array. A diameter of the light transmission hole may be smaller than 3 mm, and a spacing between the light transmission holes may be smaller than 3 mm. For example, the diameter of the light transmission hole may be 1 mm, and the spacing between the light transmission holes may be 1.5 mm.

The inkjet printing layer 132 is formed at an inner surface of the transparent substrate layer 131 through inkjet printing, and comprises a light-transmitting pattern which is light-transmissive. The light-transmitting pattern may be an identification such as a graph or text. For example, by taking the washing machine as an example, the inkjet printing layer 132 may comprise a light-transmitting pattern for characterizing washing and dehydration and a text for characterizing the amount of water. For example, by taking the rice cooker as an example, the inkjet printing layer 132 may comprise a light-transmitting pattern for characterizing a rice cooking mode. Each light-transmitting pattern may correspond to one key. For example, the lamp panel 110 at an inner side of the light-transmitting pattern may be provided with a corresponding control key. The control key may be a conductive spring electrically connected to the electric control board, to lower the production cost.

The light-shielding layer 133 is disposed at the inner surface of the transparent substrate layer 131, and has a light-transmitting region at the position of the light-shielding layer 133 corresponding to the light-transmitting pattern, i.e., the light-transmitting region is directly opposite to the light-transmitting pattern at the inkjet printing layer 132. The light-shielding layer 133 is used to cooperate with the inkjet printing layer 132 to cover a region in the inkjet printing layer 132 that provides no light-transmitting pattern, preventing the light from transmitting through the region. In this way, only the light-transmitting pattern is illuminated when the lamp panel 110 emits light, to contrast with another region.

The lamp panel 110 is mounted at the inner surface of the display film 130, and may emit light towards the transparent substrate layer 131 when the lamp panel 110 is powered on. Correspondingly, the light is emitted in a direction from the lamp panel 110, the light-shielding layer 133, the inkjet printing layer 132, to the transparent substrate layer 131.

The light emitted from the lamp panel 110 is irradiated towards the light-shielding layer 133, and at least part of the light transmits through the light-transmitting region and is irradiated onto the light-transmitting pattern of the inkjet printing layer 132. Another region of the inkjet printing layer 132 having no light-transmitting pattern are not illuminated because of the shielding of the light-shielding layer 133, i.e., the light-transmitting pattern forms a large contrasting difference in brightness with the other region around the light-transmitting pattern, enabling the user to clearly see the light-transmitting pattern.

In the related art, two membranes are disposed at two sides of the substrate layer as the inkjet printing layer 132 and the light-shielding layer 133. This manner requires pasting at the two sides of the substrate layer with glue, to ensure that the light-shielding layer 133 and the inkjet printing layer 132, which are spaced apart by the substrate layer, are aligned with each other. Therefore, operation difficulty is large, and the yield is difficult to be ensured.

Referring again to FIG. 42 and FIG. 43, in a structure of the display apparatus 100 according to the embodiments of the present disclosure, a display film 130 may be provided, on which the inkjet printing layer and the light-shielding layer are formed. The display film 130 is disposed at the inner surface of the transparent substrate layer 131, and the inkjet printing layer 132 and the light-shielding layer 133 are disposed at a same side of the transparent substrate layer 131, to enhance production efficiency during processing. On the other hand, the inkjet printing layer 132 and the light-shielding layer 133 are each disposed at the inner surface of the transparent substrate layer 131, which can reduce a number of membranes. In this way, the power of the lamp panel 110 can be reduced, or the brightness of the lamp panel 110 can be lowered, and a life of the lamp panel 110 can be prolonged.

In some embodiments, the transparent substrate layer 131 may be a housing, and the housing comprises a light-transmitting portion. For example, the housing is made of a light-transmitting material in a region for mounting the display apparatus 100. For example, the light-transmitting portion of the housing is made of an ABS material or a PC material.

It should be noted that, in the related art, a separate substrate needs to be designed for carrying the inkjet printing layer and the light-shielding layer 133, which makes it necessary to consider the separate assembly structure of the substrate when the display apparatus 100 is mounted in the electrical device. Moreover, it is necessary to reserve a sufficiently large mounting position where the display apparatus 100 is located, which affects the design of a space layout of the electrical device.

According to the display apparatus 100 of the embodiments of the present disclosure, the display film 130 is directly disposed at the housing, which can omit a part of an assembly structure therein, and can occupy a smaller mounting space.

It should be noted that during actual processing, it is necessary to ensure that the light-transmitting of the inkjet printing layer 132 is aligned with the light-transmitting region of the light-shielding layer 133. In this way, the light-transmitting pattern can be prevented from being displayed incompletely, or occurrence of light leakage at the edge of the light-transmitting pattern can be avoided.

During actual processing, the light-transmitting region of the light-shielding layer 133 may be set smaller than the light-transmitting pattern of the inkjet printing layer 132, i.e., the light-shielding layer 133 may be aligned with the edge of the inkjet printing layer 132. In this way, a precision requirement for alignment between the inkjet printing layer 132 and the light-shielding layer 133 can be lowered. It is ensured that there is no light leakage at an edge of the inkjet printing layer 132.

As shown in FIG. 42, when a solid portion of the light-shielding layer 133 is accurately aligned with the light-transmitting pattern of the inkjet printing layer, the light-shielding layer 133 and the inkjet printing layer are substantially flush with each other spatially, and the inkjet printing layer and the light-shielding layer 133 are substantially at a same layer.

As shown in FIG. 43, during actual processing, the solid portion of the light-shielding layer 133 presses an outer ring of the light-transmitting pattern. In this way, the transparent substrate layer 131, the inkjet printing layer, and the light-shielding layer 133 can be arranged in layers successively.

In some embodiments, the light-shielding layer 133 is bonded to the transparent substrate layer 131. The light-shielding layer 133 may be bonded to the inner surface of the transparent substrate layer 131 through an adhesive. A light-transmitting pattern exposed from the light-transmitting region of the light-shielding layer 133 may also be bonded to the inner surface of the transparent substrate layer 131.

In practical implementation, the inkjet printing layer 132 may be formed at the inner surface of the transparent substrate layer 131 through inkjet printing, and the inkjet printing layer 132 formed through inkjet printing has better clarity, a color reproduction degree, saturation, and a hiding effect.

In some embodiments, the display film 130 further comprises a texture layer. The texture layer is disposed at the inner surface of the transparent substrate layer 131. The inkjet printing layer 132 and the light-shielding layer 133 are disposed at an inner surface of the texture layer. The texture layer is used to shield the inkjet printing layer 132. In this way, when the inkjet printing layer 132 is viewed through the texture layer during no light being emitted from the lamp panel 110, the light-transmitting pattern of the inkjet printing layer 132 is displayed in black. The texture layer comprises a plurality of layers, and at least two of the plurality of texture layers have different colors. In this way, a better blurring and shielding effect can be achieved. In this way, when the lamp panel 110 is not powered on, the light-transmitting pattern at the inkjet printing layer 132 can be shielded by the texture layer, and the light-transmitting pattern has a better hiding effect.

As shown in FIG. 44, in some embodiments, the display film 130 further comprises a uniform light layer 134. The uniform light layer 134 is disposed at the inner surface of the light-shielding layer 133.

The lamp panel 110 is configured to emit light to the uniform light layer 134 and the display film 130. The uniform light layer 134 is capable of dispersing and blurring the light emitted from the lamp panel 110. The light is dispersed uniformly by the uniform light layer 134 after transmitting through the uniform light layer 134, enabling the light emitted from the lamp panel 110 to be better in light uniformity degree. A thickness of the uniform light layer 134 is preferably smaller than or equal to 2 mm, which is beneficial to that the light emitted from the lamp panel 110 is not too dim after transmitting through the uniform light layer 134 with an appropriate thickness.

In some embodiments, the display apparatus 100 further comprises a glass panel (the glass panel is a specific implementation of the light-transmitting substrate 10 in First embodiment) or a plastic panel (the plastic panel is a specific implementation of the light-transmitting substrate 10 in First embodiment).

In an exemplary embodiment of the present disclosure, the display film 130 may be attached to an inner surface of the glass panel, i.e., the transparent substrate layer 131 may be attached to the inner surface of the glass panel. It should be noted that when the light-shielding layer 133 is disposed at an outer surface of the glass panel, a scratch of the inkjet printing layer 132 is easily made. Moreover, the light-shielding layer 133 is not easy to be attached to the glass panel, and an adhesive force between the light-shielding layer 133 and the glass panel after being attached to each other is low. When the transparent substrate layer 131 is attached to the inner surface of the glass panel, the transparent substrate layer 131 is easy to be attached to the glass panel, with a strong adhesive force after the attachment. The glass panel may be the housing of the household appliance, and may protect the display film 130.

The display film 130 may be attached to the outer surface of the plastic panel, i.e., the light-shielding layer 133 may be attached to the outer surface of the plastic panel. In an exemplary embodiment of the present disclosure, the display film 130 is fixed to the plastic panel by a process such as press-fitting and vacuuming.

### Ninth embodiment

Based on the above-described full-screen display apparatus, the present disclosure also provides a household appliance. The household appliance comprises a household appliance body and the full-screen display apparatus according to any of the above-described embodiments. The full-screen display apparatus is disposed at the household appliance body.

The household appliance comprises, but is not limited to, a rice cooker, a water purifier, a coffee machine, a cooking machine, a washing machine, a water heater, a refrigerator, or a vending machine.

### Tenth embodiment

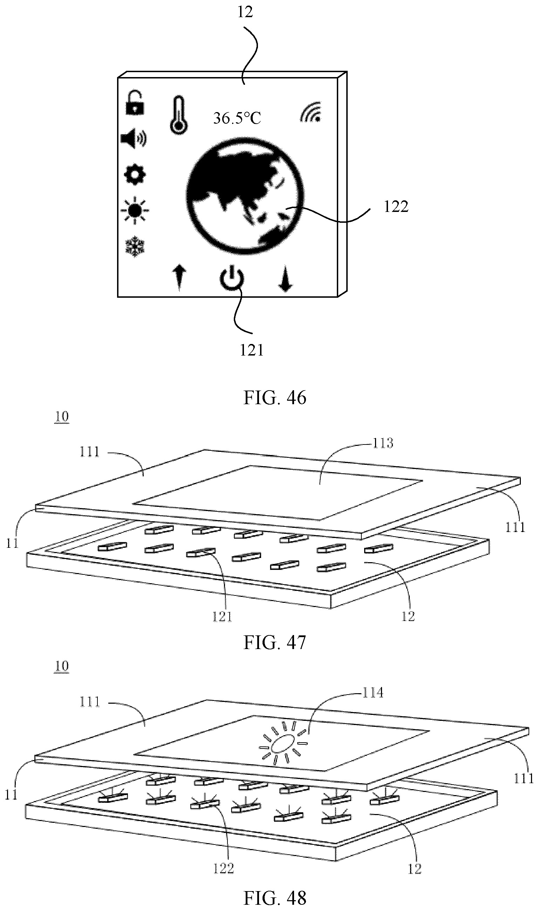

Referring to FIG. 45 and FIG. 46, in an embodiment, the household appliance (equivalent to the household appliance in Ninth embodiment) comprises a backlight module 11 (equivalent to the backlight module 40 in First embodiment), a display film 12 (the display film 12 comprises the inkjet printing layer 20 and the light-shielding layer 30 in First embodiment), and an electric control board 13 (equivalent to the electric control board 82 in First embodiment). The display film 12 is located at a light-emitting side of the backlight module 11. The electric control board 13 is located at a side of the backlight module 11 facing away from the display film 12, and is electrically connected to the backlight module 11. A conductive member 14 (equivalent to the elastic electric conductor 83 in First embodiment) is connected between the display film 12 and the electric control board 13. The display film 12 has a touch control pattern region 12A and a background pattern region 12B. The touch control pattern region 12A has a touch control pattern 121 (equivalent to the touch control pattern 22 in First embodiment). The background pattern region 12B has a background pattern 122 (equivalent to the background pattern 21 in First embodiment). The touch control pattern 121 and the background pattern 122 are each light-transmitting. The light emitted from the backlight module 11 is capable of transmitting through the touch control pattern 121 and the background pattern 122, to make the touch control pattern 121 and the background pattern 122 be prominently displayed.

In addition, a light-transmitting inductor (equivalent to the light-transmitting conductive member 81 in First embodiment) is disposed at the back surface of the display film 12 in correspondence with the touch control pattern region 12A. A projection of the light-transmitting inductor on the display film 12 covers the touch control pattern 121. The light-transmitting inductor is electrically connected to the conductive member 14. The light-transmitting inductor is capable of sensing the user's touch operation through capacitive sensing and generate a corresponding touch control instruction when the user touches the touch control pattern 121. The touch control instruction is transmitted to the electric control board 13 through the conductive member 14, and the electric control board 13 controls the household appliance to perform a corresponding operation according to the received touch control instruction. The light emitted from the backlight module 11 is capable of transmitting through the light-transmitting inductor to illuminate the touch control pattern 121. It can be understood that touching different touch control patterns 121 may trigger different touch control instructions to realize different control functions. The light-transmitting inductor may specifically be a light-transmitting membrane layer having a conductive function, such as a conductive silver paste layer, a conductive resin layer, an indium tin oxide layer, and other light-transmitting and conductive membrane layers.

The specific shape of the background pattern 122 may be various, for example, may be the earth pattern, the moon pattern, and the lake surface pattern, to improve a richness degree of the displayed picture. The touch control pattern 121 is set according to actual needs. For example, the touch control pattern 121 may be a switch touch control pattern, a temperature touch control pattern, a time touch control pattern, and a mode-switching touch control pattern. After the touch control pattern 121 is illuminated by the backlight module 12, it instructs the user to touch the corresponding position, to trigger instructions, which are capable of controlling the household appliance to realize the corresponding functions, like a switch touch control instruction, a temperature touch control instruction, a time touch control instruction, and a mode-switching touch control instruction. The conductive member 14 may be non-elastic or elastic. For example, the conductive member 14 may comprise at least one of an elastic conductive spring, a metal elastic sheet, conductive rubber, or conductive foam. In this way, two ends of the conductive member 14 may be in an interference fit with the light-transmitting inductor and the bonding pad on the electric control board 13, improving the stability of the electrical connection between the conductive member 14 and the light-transmitting inductor and the stability of the electrical connection between the conductive member 14 and the electric control board 13.

In a specific embodiment, the touch control pattern 121 and the background pattern 122 in the display film 12 may be colorful. The touch control pattern 121 and the background pattern 122 may be obtained by ultraviolet (UV) inkjet printing at a surface of the polyethylene (PET) membrane, and then an ink light-shielding layer (not shown) is formed at the PET membrane through silk screen printing. The ink light-shielding layer has a light-transmitting region disposed at the region corresponding to the touch control pattern 121 and the background pattern 122. Then, the PET membrane is connected to a surface of the light-transmitting panel (not shown) facing away from the user. When the backlight module 11 performs backlight on the PTE membrane, for the touch control pattern 121, the following operations are made. The light may transmit through the light-transmitting inductor, the light-transmitting region of the ink light-shielding layer, and the touch control pattern 121 in sequence, to highlight the touch control pattern 121 and guide the user to perform the touch operation. When the backlight module 11 performs backlight on the PTE membrane, for the background pattern 122, the following operations are made. The light may sequentially transmit through the light-transmitting region of the ink light-shielding layer and the touch control pattern 121 to highlight the background pattern 122, which further improves richness of the displayed information. In other embodiments, a colorful pattern may be directly printed onto the surface of the light-transmitting panel facing away from the user through UV inkjet printing, to reduce the use of PET membrane. Moreover, a colorful effect is displayed clearer when the backlight module 11 performs backlight on a colorful pattern region.

Based on the household appliance in the above structure, in an embodiment, the method for controlling the household appliance in the present disclosure comprises the following steps.

At step S100, a touch control instruction triggered based on the touch control pattern 121 is obtained.

In the embodiment of the present disclosure, the user's finger touches the touch control pattern 121, and the light-transmitting inductor is capable of sensing the user's touch operation in the form of capacitive inductance and generate a corresponding control instruction. It can be understood that a plurality of touch control patterns 121 are provided, different touch control patterns 121 correspond to different functions, and touch control instructions that can be triggered by touching different touch control patterns 121 are different.

At step S200, the backlight module 11 is controlled to perform backlight on the background pattern 122 and the touch control pattern 121 based on the touch control instruction, and a corresponding background sound effect is outputted based on the touch control instruction.

In an embodiment of the present disclosure, when touch control is performed on each touch control pattern 121, a corresponding touch control instruction may be triggered, and each touch control instruction may correspond to a different background pattern 122 and/or touch control pattern 121, i.e., when different touch control patterns 121 are triggered, the background patterns 122 and/or touch control patterns 121 illuminated by the backlight module 11 are different. When the user views the background pattern 122 and/or the touch control pattern 121, a type of the touch control instruction may be identified from the different background patterns 122 and/or touch control patterns 121.

Further, different touch control instructions match different background sound effects. After the user touches the touch control pattern 121, the user may hear the background sound effect corresponding to the touch control instruction, and identify the type of the touch control instruction, which can avoid misoperation by the user. Even in a case where the misoperation has already occurred, it can be quickly identified from the displayed background pattern 122, the displayed touch control pattern 121, and the displayed background sound effect, and the misoperation can be timely corrected. In addition, through the background sound effect corresponding to the touch control instruction, the user may perform blind operation on the touch control pattern 121, i.e., the user does not need to look at the touch control pattern 121 and can know the touch control instruction that is currently triggered through the background sound effect, which is also conducive to control on the household appliance by users with poor eyesight and the blind users. The background sound effect may be emitted by an audible unit (not shown) built in the household appliance.

It can be understood that when touch control is performed on each touch control pattern 121, the background pattern 122 and/or the touch control pattern 121 is illuminated by the backlight module 11 while the corresponding background sound effect is outputted simultaneously. It can be that the backlight module 11 first illuminates the background pattern 122 and/or the touch control pattern 121, and then the corresponding background sound effect is outputted. It can be that the corresponding background sound effect is outputted first, and then the backlight module 11 illuminates the background pattern 122 and/or the touch control pattern 121.

In summary, in the embodiment of the present disclosure, the touch control instruction, the background pattern 122, the touch control pattern 121, and the background sound effect are in one-to-one correspondence. After the touch control instruction triggered based on the touch control pattern 121 is received, the backlight module 11 is controlled to perform backlight on the background pattern 122 and the touch control pattern 121 that correspond to the touch control instruction, and the corresponding background sound effect is outputted based on the touch control instruction, which enables the user to know from both visual and auditory dimensions that the household appliance receives the touch control instruction and the household appliance knows the type of the touch control instruction, providing the user with richer and more direct prompts for the touch control operation, and improving simplicity of the user in controlling the household appliance.

In some specific embodiments, step S200 comprises the following step.

At step S210, in response to the touch control instruction being a power-on instruction, a plurality of first target lamp sources of the backlight module 11 are controlled to be turned on to illuminate a power-on background pattern 122 corresponding to the power-on instruction in the background pattern 122 and the touch control pattern 121. A power-on background sound effect corresponding to the power-on instruction is outputted. It should be noted that the light source is equivalent to the lamp source 43 in First embodiment, and the first target lamp source refers to the first target lamp source that needs to be turned on according to the touch control instruction.

In an embodiment of the present disclosure, when the household appliance is in a power-off state, the user triggers the power-on instruction by touching a switch touch control pattern in the plurality of touch control patterns 121, and the household appliance controls the plurality of first target light sources in the backlight module 11 to be turned on based on the power-on instruction after obtaining the power-on instruction corresponding to the switch touch control pattern, to illuminate the background pattern 122 and the touch control patterns 121, which informs the user, from a visual dimension, that the household appliance receives the power-on instruction and that the current touch control instruction is the power-on instruction. In an exemplary embodiment of the present disclosure, a correspondence between the type of the touch control instruction and the light source that is turned on may be stored in advance, such that a corresponding light source is obtained according to the type of the touch control instruction when the touch control instruction is obtained. For example, when the touch control instruction is the power-on instruction, the first target light source is obtained according to the correspondence between the type of the touch control instruction and the light source that is turned on, and the first target light source is controlled to be turned on, to illuminate a background pattern 122 and a touch control pattern 121 that corresponds to the first target light source at the position, enabling different touch control instructions to correspond to different background patterns 122 and touch control patterns 121. It can be understood that the correspondence between the type of the touch control instruction and the light source that is turned on may be stored in advance in the household appliance, or may be obtained from a cloud server in a communicative connection with the household appliance after the touch control instruction is received.

Before, at the same time as, or after controlling the plurality of first target light sources of the backlight module 11, a corresponding power-on background sound effect is played according to the power-on instruction, to inform the user from an auditory dimension that the household appliance receives the power-on instruction and that the current touch control instruction is the power-on instruction. In an exemplary embodiment of the present disclosure, by storing the correspondence between the type of the touch control instruction and the background sound effect in advance, when the touch control instruction is obtained, the background sound effect is obtained according to the type of the touch control instruction. For example, when the touch control instruction is the power-on instruction, the corresponding power-on background sound effect is obtained according to the correspondence between the type of the touch control instruction and the background sound effect, and the background sound effect is outputted, enabling different touch control instructions to correspond to different background sound effects. It can be understood that the correspondence between the type of the touch control instruction and the light source that is turned on may be stored in the household appliance in advance, or may be obtained from the cloud server in a communicative connection with the household appliance after the touch control instruction is received.

It can be understood that the background sound effect may be set as desired. In some specific embodiments, a volume of the power-on background sound effect may gradually increase. In another specific embodiment, a tonality of the power-on background sound effect may gradually increase. In yet another specific embodiment, the volume and the tonality of the power-on background sound effect may each gradually increase, to make the power-on background sound effect significantly distinguishable from other sound effects, facilitating the user's identification. In addition, the power-on background sound effect may be a chord tone, and a volume and/or a tonality of the chord tone may gradually increase, to improve the richness of the background sound effect.

### Eleventh embodiment

Referring to FIG. 47 and FIG. 48, this embodiment proposes a display control method for the household appliance 10 (equivalent to the method for controlling the household appliance in Tenth embodiment), which is capable of displaying different target display patterns 114 according to different display instructions. Moreover, a display process of the target display pattern 114 is accompanied with a dynamic change. Therefore, diversity of a display manner of the household appliance 10 (equivalent to the household appliance in Ninth embodiment) can be enhanced. Meanwhile, an amount of information that can be displayed by the household appliance 10 is increased.

The household appliance 10 comprises the display film layer 11 and the backlight module 12 (equivalent to the backlight module 40 in First embodiment).

Referring to FIG. 47 and FIG. 48, the backlight module 12 is disposed at the light incident side of the display film layer 11. A side of the display film layer 11 for receiving the light emitted by the backlight module 12 is the light incident side of the display film layer 11. The backlight module 12 comprises a plurality of backlight sources 121 (equivalent to the lamp source 43 in First embodiment) that can be independently controlled, i.e., illuminating, extinguishing, and luminous brightness of each of the backlight sources 121 do not affect each other. The backlight source 121 may be, but is not limited to, an LED dot matrix or light-emitting blocks, and the backlight sources 121 may be a multicolor backlight source. For example, the same backlight 121 emits light in three colors, i.e., a red, green, and blue light, and light in each color may be emitted separately or emitted after being mixed. Each to-be-displayed pattern 113 is corresponding to at least one backlight source 121, i.e., each to-be-displayed pattern 113 may be illuminated by one backlight source 121 or a plurality of backlight sources 121.

In an embodiment, the display control method for the household appliance 10 comprises the following steps S102 and S104.

At step S102, a corresponding target backlight source 122 is obtained from the plurality of backlight sources 121 in response to a display instruction being obtained.

At step S102, "the display instruction" may be understood as an instruction for selecting which of the backlight sources 121 to be used as the target backlight source 122 to illuminate the to-be-displayed pattern 113. The display instruction may be triggered by the user touching the aforementioned touch control indication pattern, or triggered at predetermined time, or triggered in response to a change in an environment around the household appliance 10. It can be understood that according to the different display instructions obtained, different backlight sources 121 may be obtained from the plurality of backlight sources 121 as the target backlight source 122, to illuminate different to-be-displayed patterns 113.

At step S104, the target backlight source 122 is controlled based on a predetermined lighting manner, to dynamically illuminate a target display pattern 114 in a plurality of to-be-displayed patterns 113 corresponding to the target backlight source 122.

At step S104, "the predetermined lighting manner" means that a predetermined lighting effect is achieved through one or more of time, an order, or brightness of the target backlight source 1022 being lit. "The dynamical illumination" means that the to-be-displayed pattern 113 is not instantaneously illuminated, but that in a spatial dimension, different to-be-displayed patterns 113 and/or different regions of the same to-be-displayed pattern 113 are gradually illuminated to form the target display pattern 114, and/or in a temporal dimension, brightness of the to-be-displayed pattern 113 gradually increases or decreases. It can be understood that the target display pattern 114 is a to-be-displayed pattern corresponding to a position of the target backlight source 122. After the target backlight source 122 is lit based on the predetermined lighting manner, the to-be-displayed pattern 113 is illuminated and displayed as the target display pattern 114, which is easy for the user to identify and determine. Moreover, it can be understood that dynamic display effects of the target display pattern 114 corresponding to the target backlight source 122 are different according to different predetermined lighting manners formed by selecting one or more of the time, order, or brightness of the target backlight source 122 when illuminated.

The display control method in the embodiments of the present disclosure selects different backlight sources 121 as the target backlight source 122 according to different display instructions, and controls different target backlight sources 122 to emit light based on the predetermined lighting manner. In this way, different target backlight sources 122 dynamically illuminate different corresponding target display patterns 114, enabling the household appliance 10 to select different to-be-displayed patterns 113 according to different display instructions. Moreover, the to-be-displayed pattern 113 is illuminated to form the target display pattern 114 by the target backlight source 122 in a dynamical illumination manner, i.e., a dynamic display is realized, which not only enhances the diversity of the display manner of the household appliance 10, but also improves the amount of information that can be displayed by the household appliance 10.

In another specific embodiment, step S104 comprises the following steps.

At step S304, a light-emitting power of the target backlight source 122 is controlled to gradually increase to a target light-emitting power, and a brightness of the target display pattern 114 illuminated by the target backlight source 122 is enabled to gradually increase.

At step S304, the "target light-emitting power" may be understood as a predetermined maximum light-emitting power of the target backlight source 122 when illuminating the to-be-displayed pattern 113. For example, the target light-emitting power may be a rated power of the target backlight source 122 or 80% of the rated power. Different target backlight sources 122 may have different target light-emitting powers to enable different target display patterns 114 to have different display brightness. By controlling the light-emitting power of the target backlight source 122 to gradually increase to the target light-emitting power, the brightness of the to-be-displayed pattern 113 corresponding to the target backlight source 122 is caused to gradually increase, forming an effect of gradually increasing the brightness in the time dimension. For example, when the target light-emitting power of the target backlight source 122 may be 0.7 watts, then the light-emitting power of the target backlight source 122 may gradually increase from 0 watts to 0.7 watts during a light-emitting process of the target backlight source 122. In other embodiments of the present disclosure, the light-emitting power of the target backlight source 122 may also be controlled to gradually decrease to a predetermined light-emitting power, which allows the brightness of the target backlight source 122 illuminating the target display pattern 114 to gradually decrease, to achieve an effect of the target display pattern 114 gradually being extinguished.

It should be noted that the process of dynamically illuminating the target display pattern 114 corresponding to the target backlight source 122 at least comprises one manner of being dynamically illuminated. For example, the target backlight sources 122 at different positions may be sequentially illuminated according to position information. In this way, when or after the target display pattern 114 is gradually illuminated in the spatial dimension, the light-emitting power of the target backlight source 122 may be controlled to gradually increase to the target light-emitting power, allowing the brightness of the target display pattern 114 to gradually increase. Moreover, it can be understood that the target light-emitting powers of the target backlight sources 122 at different positions may be the same or different after the target backlight sources 122 at the different positions are lit sequentially according to the corresponding position information.

While preferred embodiments of the present disclosure have been described above, the present disclosure is not limited thereto. Any modification, equivalent replacement, improvement, etc., made within the spirit and principle of the present disclosure shall fall within the scope of the present disclosure.

## Claims

1. A full-screen display apparatus, comprising:
a light-transmitting substrate;
an inkjet printing layer formed at the light-transmitting substrate through inkjet printing, the inkjet printing layer at least comprising a background pattern and a touch control pattern, each of the background pattern and the touch control pattern being light-transmissive;
a light-shielding layer disposed at the inkjet printing layer or the light-transmitting substrate, the light-shielding layer comprising a light-transmitting region corresponding to the background pattern and the touch control pattern; and
a backlight module disposed at a light incident side of the light-transmitting substrate, light emitted by the backlight module being capable of transmitting through the light-transmitting substrate, the background pattern, the touch control pattern, and the light-transmitting region to illuminate the background pattern and the touch control pattern.

2. The full-screen display apparatus according to claim 1, wherein the inkjet printing layer further comprises a state indication pattern that is light-transmissive.

3. The full-screen display apparatus according to claim 2, wherein the state indication pattern, the background pattern, and the touch control pattern share the backlight module.

4. The full-screen display apparatus according to claim 2 or 3, further comprising:
a nixie tube corresponding to the state indication pattern, the nixie tube being configured to illuminate at least part of a region of the state indication pattern.

5. The full-screen display apparatus according to any one of claims 1 to 4, wherein the background pattern comprises a grating three-dimensional pattern.

6. The full-screen display apparatus according to any one of claims 1 to 5, further comprising a display screen comprising a liquid crystal display screen and/or an organic light-emitting diode (OLED) display screen, the display screen and the backlight module being arranged side by side, and a light-emitting side of the display screen and a light-emitting side of the backlight module facing towards a same side.

7. The full-screen display apparatus according to any one of claims 1 to 6, wherein the light-transmitting substrate has a light transmittance greater than or equal to 40% and smaller than or equal to 60%.

8. The full-screen display apparatus according to any one of claims 1 to 7, wherein:
the light-transmitting substrate comprises a glass substrate, the inkjet printing layer being formed at a back surface of the glass substrate through inkjet printing, and the light-shielding layer being disposed at a front surface or the back surface of the glass substrate; or
the light-transmitting substrate comprises a glass substrate and a transparent substrate layer attached to a back surface of the glass substrate, the inkjet printing layer being disposed at a back surface of the transparent substrate layer, and the light-shielding layer being disposed at a front surface or the back surface of the transparent substrate layer; or
the light-transmitting substrate comprises a plastic substrate that is light transmissive and a transparent substrate layer attached to a front surface of the plastic substrate, the inkjet printing layer being disposed at a back surface of the transparent substrate layer, and the light-shielding layer being disposed at a front surface or the back surface of the transparent substrate layer.

9. The full-screen display apparatus according to any one of claims 1 to 8, further comprising:
a light-transmitting conductive member disposed at a side of the light-transmitting substrate facing towards the backlight module, a projection of the light-transmitting conductive member on the light-transmitting substrate covering the touch control pattern;
an electric control board connected to the backlight module; and
an elastic electric conductor having two ends respectively abutting against the electric control board and the light-transmitting conductive member to be electrically connected to the electric control board and the light-transmitting conductive member.

10. The full-screen display apparatus according to claim 9, wherein the backlight module comprises:
a lamp panel support disposed between the electric control board and the light-transmitting substrate;
a lamp panel disposed between the lamp panel support and the light-transmitting substrate and electrically connected to the electric control board; and
a plurality of lamp sources disposed at the lamp panel and electrically connected to the lamp panel, the plurality of lamp sources being disposed facing towards the light-transmitting substrate and spaced apart from the light-transmitting substrate,
wherein the elastic electric conductor penetrates the lamp panel support.

11. The full-screen display apparatus according to claim 10, wherein the elastic electric conductor comprises at least one of a spring, a metal elastic sheet, conductive rubber, or conductive foam, the conductive rubber and the lamp panel support being integrally formed through injection-molding when the elastic electric conductor comprises the conductive rubber.

12. The full-screen display apparatus according to claim 10, wherein a surface of the lamp panel facing towards the light-transmitting substrate is provided with a white coating.

13. The full-screen display apparatus according to claim 9, wherein the light-transmitting conductive member comprises:
a light-transmitting portion, a projection of the light-transmitting portion on the light-transmitting substrate covering the touch control pattern; and
a power connection portion abutting against and electrically connected to the elastic electric conductor.

14. The full-screen display apparatus according to claim 9, wherein a light-transmitting inductor comprises at least one of a conductive silver paste layer, an indium tin oxide layer, or a conductive resin layer.

15. The full-screen display apparatus according to claim 9, wherein the elastic electric conductor is in an interference fit with the electric control board and the light-transmitting conductive member.

16. The full-screen display apparatus according to claim 1, wherein the inkjet printing layer has a grating three-dimensional pattern, the grating three-dimensional pattern being capable of displaying different patterns when viewed from different viewing angles, and light emitted from the backlight module being capable of illuminating the grating three-dimensional pattern.

17. The full-screen display apparatus according to claim 16, wherein the grating three-dimensional pattern is capable of displaying a pattern comprising at least one of a skeuomorphism pattern, a text pattern, or a number pattern.

18. The full-screen display apparatus according to claim 16, wherein the grating three-dimensional pattern has a grating viewing angle greater than or equal to 30 degrees and smaller than or equal to 60 degrees.

19. The full-screen display apparatus according to claim 16, further comprising:
a grating plate, the grating three-dimensional pattern being disposed at the grating plate, the grating plate having a thickness of h, wherein h is greater than or equal to 0.25 mm and smaller than or equal to 0.9 mm.

20. The full-screen display apparatus according to claim 1, comprising a display film comprising the inkjet printing layer and the light-shielding layer, wherein the backlight module comprises:
a lamp panel; and
a lamp panel support disposed at the lamp panel,
wherein the display film is disposed at the lamp panel support and opposite to the lamp panel, a spacing between the lamp panel and the display film being greater than or equal to 9 mm and smaller than or equal to 11 mm.

21. The full-screen display apparatus according to claim 20, wherein the spacing between the lamp panel and the display film is 10 mm.

22. The full-screen display apparatus according to claim 20, wherein the lamp panel support comprises:
an outer frame connected to the display film to support the display film; and
a grating connected to the outer frame and disposed between the display film and the lamp panel, the grating having a plurality of light-transmitting regions, and light emitted by the lamp panel providing the display film with backlight through the plurality of light-transmitting regions,
wherein the lamp panel comprises a plurality of sub-panels, the plurality of sub-panels being in one-to-one correspondence to the plurality of light-transmitting regions.

23. The full-screen display apparatus according to claim 22, wherein a spacing between a side of the grating away from the lamp panel and the display film is greater than or equal to 4 mm and smaller than or equal to 5 mm.

24. The full-screen display apparatus according to claim 1, wherein:
the backlight module comprises:
a light guide plate disposed at the light incident side of the light-transmitting substrate; and
a lamp source disposed adjacent to the light guide plate, light emitted by the lamp source being capable of passing through the light guide plate to illuminate the touch control pattern; and
the full-screen display apparatus further comprises:
an electric control board electrically connected to the lamp source and located at a side of the light guide plate facing away from the light-transmitting substrate; and
a light reflection coating disposed at a side of the electric control board facing towards the light guide plate and attached to the electric control board, the light reflection coating being configured to reflect light projected onto the light reflection coating.

25. The full-screen display apparatus according to claim 24, wherein the light reflection coating is an argenteous coating or a reflective lacquer coating.

26. The full-screen display apparatus according to claim 25, wherein:
the light reflection coating is the argenteous coating, the argenteous coating having a thickness greater than or equal to 0.1 µm and smaller than or equal to 0.3 µm, and/or the argenteous coating being an aluminum coating or a silver coating; or
the light reflection coating is the reflective lacquer coating, the reflective lacquer coating having a thickness greater than or equal to 0.1 µm and smaller than or equal to 0.5 µm.

27. A household appliance, comprising a household appliance body and a full-screen display apparatus disposed at the household appliance body, and the full-screen display apparatus comprising:
a light-transmitting substrate;
an inkjet printing layer formed at the light-transmitting substrate through inkjet printing, the inkjet printing layer at least comprising a background pattern and a touch control pattern, each of the background pattern and the touch control pattern being light transmissive;
a light-shielding layer disposed at the inkjet printing layer or the light-transmitting substrate, the light-shielding layer comprising a light-transmitting region corresponding to the background pattern and the touch control pattern; and
a backlight module disposed at a light incident side of the light-transmitting substrate, light emitted by the backlight module being capable of transmitting through the light-transmitting substrate, the background pattern, the touch control pattern, and the light-transmitting region to illuminate the background pattern and the touch control pattern.

28. A method for controlling a household appliance, applied in the household appliance according to claim 27, the method comprising:
obtaining a touch control instruction triggered based on the touch control pattern; and
controlling the backlight module to perform backlight on the background pattern and the touch control pattern based on the touch control instruction and outputting a corresponding background sound effect based on the touch control instruction.

29. The method for controlling the household appliance according to claim 28, wherein said controlling the backlight module to perform backlight on the background pattern and the touch control pattern based on the touch control instruction and outputting the corresponding background sound effect based on the touch control instruction comprises:
in response to the touch control instruction being a power-on instruction, controlling a plurality of first target lamp sources of the backlight module to be turned on to illuminate a power-on background pattern corresponding to the power-on instruction in the background pattern and the touch control pattern; and
outputting a power-on background sound effect corresponding to the power-on instruction.

30. A method for controlling a household appliance, applied in the household appliance according to claim 27, the method comprising:
obtaining a corresponding target lamp source from a plurality of lamp sources of the backlight module in response to a display instruction being obtained; and
controlling the target lamp source based on a predetermined lighting manner allowing the target lamp source to dynamically illuminate a target display pattern of a plurality of to-be-displayed patterns corresponding to the target lamp source, the plurality of to-be-displayed patterns comprising the touch control pattern, the background pattern, and a state indication pattern.

31. The method for controlling the household appliance according to claim 30, wherein said controlling the target lamp source based on the predetermined lighting manner allowing the target lamp source to dynamically illuminate the target display pattern of the plurality of to-be-displayed patterns corresponding to the target lamp source comprises:
controlling a light-emitting power of the target lamp source to gradually increase to a target light-emitting power, allowing a brightness of the target display pattern illuminated by the target lamp source to gradually increase.
